(19) Europäisches Patentamt / European Patent Office / Office européen des brevets

(11) **EP 2 381 594 B1**

(12) **EUROPEAN PATENT SPECIFICATION**

(45) Date of publication and mention
of the grant of the patent:
**31.05.2017 Bulletin 2017/22**

(51) Int Cl.:
*H04B 10/61* (2013.01)  *H04J 14/06* (2006.01)
*H04B 10/2569* (2013.01)  *H04J 14/00* (2006.01)

(21) Application number: **10305416.9**

(22) Date of filing: **21.04.2010**

(54) **Polarization demultiplexing at a coherent optical receiver**

Polarisierungs-Demultiplexen an einem kohärenten optischen Empfänger

Démultiplexage de polarisation dans un récepteur optique cohérent

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(43) Date of publication of application:
**26.10.2011 Bulletin 2011/43**

(73) Proprietor: **ALCATEL LUCENT
92100 Boulogne-Billancourt (FR)**

(72) Inventors:
• **Cucchi, Silvio
20083, GAGGIANO (IT)**
• **Kaneda, Noriaki
WESTFIELD, 07090 NJ (US)**
• **Weisser, Stefan
D-90409, NUERNBERG (DE)**
• **Costantini, Carlo
23880, CASATENOVO (IT)**
• **Leven, Andreas
D-74321, BIETIGHEIM-BISSINGEN (DE)**

(74) Representative: **Wetzel, Emmanuelle et al
Alcatel-Lucent Deutschland AG
Lorenzstrasse 10
70435 Stuttgart (DE)**

(56) References cited:
EP-A1- 2 109 233      EP-A1- 2 146 448
US-A1- 2005 223 050   US-A1- 2008 159 758
US-A1- 2010 003 028

• TAKIGUCHI K ET AL: "Demultiplexer for optical orthogonal frequency-division multiplexing using an optical fast-Fourier-transform circuit" OPTICS LETTERS, OSA, OPTICAL SOCIETY OF AMERICA, WASHINGTON, DC, US LNKD-DOI:10.1364/OL.34.001828, vol. 34, no. 12, 15 June 2009 (2009-06-15) , pages 1828-1830, XP001523599 ISSN: 0146-9592
• SEB J SAVORY: "Digital filters for coherent optical receivers" OPTICS EXPRESS, OSA (OPTICAL SOCIETY OF AMERICA), WASHINGTON DC, (US) LNKD-DOI:10.1364/OE.16.000804, vol. 16, no. 2, 21 January 2008 (2008-01-21), pages 804-817, XP007906766 ISSN: 1094-4087

## Description

## Technical Field

The present invention relates to the field of optical communications, in particular to coherent optical receivers for optical communication networks. Even more in particular, the present invention relates to the polarization demultiplexing at a coherent optical receiver for an optical communication network.

## Background Art

In a known optical communication network, different digital data streams may be transmitted by using a so-called polarization diversity technique.

According to the polarization diversity technique, two optical carriers having a same frequency and orthogonal polarizations (e.g. horizontal and vertical) are provided. Then, a first digital data stream to be transmitted is used for digitally modulating the horizontally polarized optical carrier, while a second digital data stream to be transmitted is used for digitally modulating the vertically polarized optical carrier. In particular, one or more parameters (for instance, amplitude and/or phase) of the optical carriers are varied according to the respective digital data stream, thereby generating a horizontal modulated optical signal $s_H(t)$ and a vertical modulated optical signal $s_V(t)$ that may be expressed by the following equations:

$$s_H(t)=A_H \cos(2\pi ft-\theta_H) = [A_H \cos\theta_H] \cos(2\pi ft) + [A_H \sin\theta_H] \sin(2\pi ft), \qquad [1a]$$

$$s_V(t)=A_V \cos(2\pi ft-\theta_V) = [A_V \cos\theta_V] \cos(2\pi ft) + [A_V \sin\theta_V] \sin(2\pi ft). \qquad [1b]$$

$A_H$, $A_V$ are the amplitudes of the horizontal and vertical modulated optical signals, f is the frequency of the optical carriers, and $\theta_H$, $\theta_V$ are the phases of the horizontal and vertical modulated optical signals, respectively.

Different types of digital modulations are known, such as for instance: phase modulations (PSK, DPSK, QPSK, etc.) wherein the phases $\theta_H$, $\theta_V$ are varied according to the digital data streams to be transmitted, and amplitude-phase modulations (QAM, etc.) where both the amplitudes $A_H$, $A_V$ and phases $\theta_H$, $\theta_V$ are varied according to the digital data stream to be transmitted.

The horizontal modulated optical signal $s_H(t)$ and the vertical modulated optical signal $s_V(t)$ may be further expressed by the following equations:

$$s_H (t)=I_H \cos(2\pi ft) + Q_H \sin(2\pi ft), \qquad\qquad [2a]$$

$$s_V (t)=I_V \cos(2\pi ft) + Q_V \sin(2\pi ft), \qquad\qquad [2b]$$

where $I_H=A_H \cos\theta_H$ and $I_V=A_V \cos\theta_V$ are typically termed in-phase components of the horizontal and vertical modulated optical signals, respectively, while $Q_H=A_H \sin\theta_H$ and $Q_V=A_V \sin\theta_V$ are typically termed quadrature components of the horizontal and vertical modulated optical signals, respectively.

The horizontal and vertical modulated optical signals $s_H(t)$, $s_V(t)$ are then typically combined in a polarization multiplexed modulated optical signal s(t) which is then transmitted.

At the reception side, the polarization multiplexed modulated optical signal s(t) is typically demultiplexed and demodulated for retrieving the original first and second digital data streams by means of a coherent optical receiver.

A coherent optical receiver typically comprises a local oscillator which generates a local optical carrier $\cos(2\pi ft)$ having frequency substantially equal to the frequency f of the polarization multiplexed modulated optical signal s(t). Then, the coherent optical receiver separates the horizontal and vertical components $s'_H(t)$, $s'_V(t)$ of the received polarization multiplexed modulated optical signal and separately combines each of them with the local optical carrier. Then, it usually performs a photoelectric conversion of the resulting optical signals thereby deriving in-phase components $I'_H$, $I'_V$ and quadrature components $Q'_H$, $Q'v$ substantially corresponding to the above defined in-phase components $I_H$, $I_V$ and quadrature components $Q_H$, $Q_V$ of the horizontal and vertical modulated optical signals $s_H(t)$, $s_V(t)$, except for noise and/or distortion introduced by propagation of the polarization multiplexed modulated optical signal s(t). The in-phase components $I'_H$, $I'_V$ and quadrature components $Q'_H$, $Q'_V$ are typically in the form of electrical signals.

Then, the coherent optical receiver typically performs an analog-to-digital conversion of the in-phase components $I'_H$, $I'_V$ and the quadrature components $Q'_H$, $Q'_V$, thereby providing in-phase samples $I'_{Hk}$, $I'_{Vk}$ and quadrature samples $Q'_{Hk}$, $Q'_{Vk}$ (k being the sample index). The in-phase samples $I'_{Hk}$, $I'_{Vk}$ and quadrature samples $Q'_{Hk}$, $Q'_{Vk}$ are then digitally processed for retrieving the digital data streams originally transmitted. US2010/003028 discloses a set up using four FIR filters in the time domain compensating for polarization mode dispersion in a polarization multiplexed modulated optical signal.

## Summary of the invention

As known, an optical signal propagating through an optical link (e.g. through an optical fiber) may undergo Polarization Mode Dispersion (PMD). PMD consists in a time-varying random rotation of the polarization of the optical signal.

Hence, when the polarization multiplexed modulated optical signal s(t) containing the horizontal and vertical modulated optical signals $s_H(t)$, $s_V(t)$ propagates through an optical link, due to PMD the horizontal and vertical modulated optical signals $s_H(t)$, $s_V(t)$ mix each other. Therefore, at the optical coherent receiver (i.e. at the output of the optical link), the polarization of the modulated optical signals $s_H(t)$, $s_V(t)$ typically varies in time in a random way.

As mentioned above, when the polarization multiplexed modulated optical signal s(t) is received at the coherent optical receiver, it is separated in its horizontal and vertical components $s'_H(t)$, $s'_V(t)$. Disadvantageously, in the presence of PMD, these components $s'_H(t)$, $s'_V(t)$ do not correspond to the modulated optical signals $s_H(t)$, $s_V(t)$ originally transmitted, but usually each of them contains a mixing of the two.

Accordingly, the in-phase components $I'_H$, $I'_V$ and quadrature components $Q'_H$, $Q'_V$ do not correspond to the in-phase components $I_H$, $I_V$ and quadrature components $Q_H$, $Q_V$ of the horizontal and vertical modulated optical signals $s_H(t)$, $s_V(t)$. In particular, each of the in-phase components $I'_H$, $I'_V$ is a linear combination of both the in-phase components $I_H$, $I_V$. Similarly, each of the quadrature components $Q'_H$, $Q'_V$ is a linear combination of both the quadrature components $Q_H$, $Q_V$. As a result, the optical coherent receiver may not accurately retrieve the first and second digital data streams.

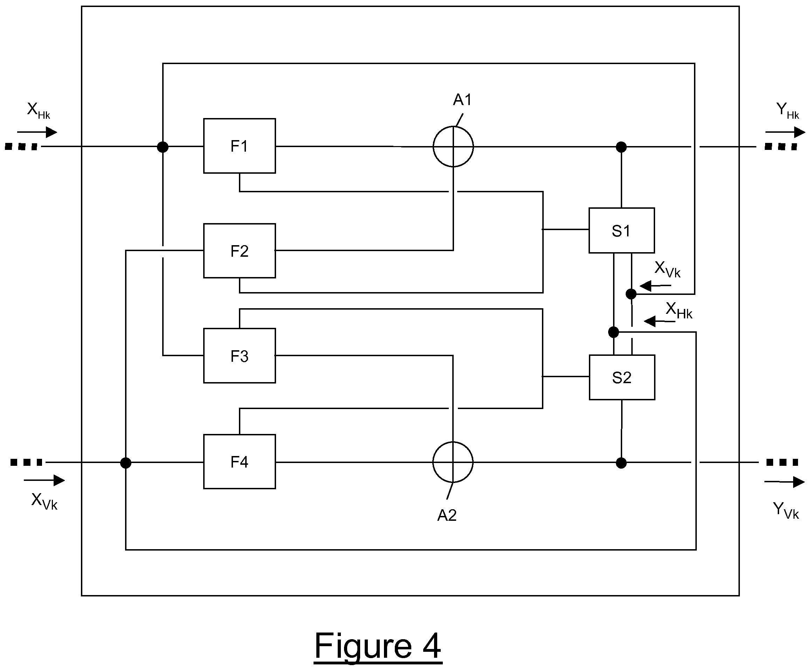

In principle, the effects of PMD may be compensated by means a polarization demultiplexer. An exemplary polarization demultiplexer suitable for compensating PMD is shown in Figure 4.

The polarization demultiplexer of Figure 4 comprises four digital filters, in particular four FIR (Finite Impulse Response) filters F1, F2, F3 and F4 having impulse responses with coefficients $H11_j$, $H12_j$, $H21_j$ and $H22_j$ (j=0, ..., L-1), respectively, two adders A1 and A2 and two supervisors S1 and S1. The two supervisors S1 and S1 may be configured to implement a so-called "blind equalizer", such as the known constant-modulus algorithm (CMA).

In particular, the inputs of the polarization demultiplexer are complex horizontal and vertical samples $X_{Hk}$, $X_{Vk}$ provided by the following equations:

$$X_{Hk} = I'_{Hk} + i\, Q'_{Hk} \qquad\qquad\qquad [3a]$$

$$X_{Vk} = I'_{Vk} + i\, Q'_{Vk} \qquad\qquad\qquad [3b]$$

where i is the imaginary unit.

Each of the filters F1 and F3 convolutes L consecutive complex horizontal samples $X_{Hk}$ with its impulsive response while, at the same time, each of the filters F2 and F4 convolutes L consecutive complex vertical samples $X_{Vk}$ with its impulsive response.

The outputs of the filters F1 and F2 are then provided to the adder A1, that adds them thereby providing the following horizontal demultiplexed sample:

$$Y_{Hk} = \sum_{j=0}^{L-1} H11_j \cdot X_{H(k-j)} + \sum_{j=0}^{L-1} H12_j \cdot X_{V(k-j)}. \qquad\qquad [4a]$$

At the same time, the outputs of the filters F3 and F4 are provided to the adder A2, that adds them thereby providing the following vertical demultiplexed sample:

$$Y_{Vk}= \sum_{j=0}^{L-1}H21_j \cdot X_{H(k-j)} + \sum_{j=0}^{L-1}H22_j \cdot X_{V(k-j)}. \qquad [4b]$$

The demultiplexed samples $Y_{Hk}$, $Y_{Vk}$, together with the input samples $X_{Hk}$, $X_{Vk}$ are then provided to the supervisors S1 and S2 which implement the CMA and hence update the coefficients $H11_j$, $H12_j$, $H21_j$ and $H22_j$ for compensating the effects of PMD.

In a serial implementation, when one horizontal sample and one vertical sample per clock cycle are provided at the input of the polarization demultiplexer, each of the four FIR filters F1, F2, F3, F4 should comprise L multipliers. In a parallel implementation, when N horizontal samples and N vertical samples (N being an integer equal to or higher than 1) are provided at the input of the polarization demultiplexer during the same clock cycle, each of the four FIR filters F1, F2, F3, F4 should comprise N·L multipliers. L may be selected according to the amount of PMD to compensate. Since the amount of PMD increases as the length of the optical link increases, compensating the PMD due to propagation on very long optical links may disadvantageously require a very high value of L, and therefore a very high number of multipliers, especially in the parallel implementation (N being typically equal to 128 or 256). Disadvantageously, the polarization demultiplexer shown in Figure 4 may be therefore very complex and costly.

Moreover, in an optical communication network, the sampling rate is very high. Therefore, the operations described by equations [4a] and [4b] (that should be repeated for each couple of input complex samples $X_{Hk}$, $X_{Vk}$) should be completed in a very short time. This further increases complexity and cost of the polarization demultiplexer shown in Figure 4.

Accordingly, the inventors have addressed the problem of providing a coherent optical receiver comprising a polarization demultiplexer that overcomes the aforesaid drawbacks.

In particular, the inventors have addressed the problem of providing a coherent optical receiver comprising a polarization demultiplexer that is simpler and cheaper to implement than the polarization demultiplexer described above.

According to a first aspect, the present invention provides a coherent optical receiver for an optical communication network, the coherent optical receiver being configured to receive a polarization multiplexed optical signal and to process it for generating a first received component and a second received component, each of the first received component and the second received component comprising a mixing of a first polarization component and a second polarization component of the polarization multiplexed optical signal as originally transmitted, the coherent optical receiver further comprising a polarization demultiplexer in turn comprising:

- a first circuit configured to calculate a first Fourier transform of the first received component and a second Fourier transform of said second received component;
- a second circuit configured to multiply the first Fourier transform by a first transfer function, multiply the second Fourier transform by a second transfer function and add the multiplied first Fourier transform and the multiplied second Fourier transform thereby providing a demultiplexed Fourier transform, and retrieve the first polarization component by applying an inverse Fourier transform operation to the demultiplexed Fourier transform; and
- a third circuit configured to retroactively update the first transfer function and the second transfer function, according to the retrieved first polarization component, the first received component and the second received component.

Preferably, the first circuit is configured to receive N first samples of the first received component and N second samples of the second received component, N being an integer equal to or higher than 1.

Preferably, the first circuit comprises a first input processing module and a second input processing module, wherein:

- the first input processing module is configured to provide N+L-1 further first samples comprising the N first samples according to an overlap and add technique or an overlap and save technique; and
- the second input processing module is configured to provide N+L-1 further second samples comprising the N second samples according to an overlap and add technique or an overlap and save technique,

L being an integer equal to or higher than 1.

Preferably, the first input processing module is configured to calculate the first Fourier transform as N+L-1 first transformed samples by applying a Fourier transform operation to the N+L-1 further first samples; and the second input processing module is configured to calculate the second Fourier transform as N+L-1 second transformed samples by applying a Fourier transform operation to the N+L-1 further second samples.

Preferably, the second circuit comprises a first multiplication module and a second multiplication module, wherein:

- the first multiplication module is configured to multiply the N+L-1 first transformed samples by the first transfer function , the first transfer function comprising N+L-1 first transformed coefficients, thereby obtaining N+L-1 first multiplied samples of the multiplied first Fourier transform; and
- the second multiplication module is configured to multiply the N+L-1 second transformed samples by the second transfer function, the second transfer function comprising N+L-1 second transformed coefficients, thereby obtaining N+L-1 second multiplied samples of the multiplied second Fourier transform.

Preferably, the second circuit comprises an addition module, the addition module being configured to add the N+L-1 first multiplied samples and the N+L-1 second multiplied samples, thereby obtaining N+L-1 demultiplexed transformed samples of the demultiplexed Fourier transform.

Preferably, the second circuit comprises an output processing module configured to apply an inverse Fourier transform operation to the N+L-1 demultiplexed transformed samples and to process them according to the overlap and add technique or the overlap and save technique, thereby providing N demultiplexed samples of the retrieved first polarization component.

Preferably, the third circuit comprises a supervisor configured to:

- process the N demultiplexed samples, the N first samples and the N second samples for calculating N first updating factors and N second updating factors;
- average the N first updating factors for obtaining a first average updating factor and the N second updating factors for obtaining a second average updating factor; and
- update L first coefficients and L second coefficients by adding to them the first average updating factor and the second average updating factor, respectively.

Preferably, the supervisor is further configured to process the N demultiplexed samples, the N first samples and the N second samples according to a constant-modulus algorithm.

Preferably, the third circuit further comprises a first feedback processing module and a second feedback processing module, wherein:

- the first feedback processing module is configured to provide N+L-1 further first coefficients comprising the L first coefficients, according to the overlap and add technique or the overlap and save technique; and
- the second feedback processing module is configured to provide N+L-1 further second coefficients comprising the L second coefficients, according to the overlap and add technique or the overlap and save technique.

Preferably, the first feedback processing module is configured to apply a Fourier transform operation to the N+L-1 further first coefficients thereby generating the N+L-1 first transformed coefficients; and the second feedback processing module is configured to apply a Fourier transform operation to the N+L-1 further second coefficients thereby generating the N+L-1 second transformed coefficients.

According to an advantageous variant, the first circuit is further configured to, before calculating the first Fourier transform and the second Fourier transform, divide the N first samples into N/2 even first samples and N/2 odd first samples and divide the N second samples into N/2 even second samples and N/2 odd first samples.

Preferably, the first circuit is configured to calculate the first Fourier transform by applying a Fourier transform operation to the N/2 even first samples and calculate the second Fourier transform by applying a Fourier transform operation to the N/2 even second samples; calculate a third Fourier transform by applying a Fourier transform operation to the N/2 odd first samples and calculate a fourth Fourier transform by applying a Fourier transform operation to the N/2 odd second samples.

Preferably, the second circuit is further configured to multiply the third Fourier transform by a third transfer function, multiply the fourth Fourier transform by a fourth transfer function and add the multiplied first Fourier transform, the multiplied second Fourier transform, the multiplied third Fourier transform and the multiplied fourth Fourier transform thereby providing the demultiplexed Fourier transform, and calculate N/2 samples of the retrieved first polarization component as an inverse Fourier transform of the demultiplexed Fourier transform.

According to a second aspect thereof, the present invention provides an optical communication network comprising a coherent optical receiver as set forth above.

According to a third aspect thereof, the present invention provides a method for demultiplexing a polarization multiplexed optical signal received at a coherent optical receiver of an optical communication network, the method comprising the following steps:

- processing the received polarization multiplexed optical signal for generating a first received component and a second received component, each of the first received component and the second received component comprising a mixing of a first polarization component and a second polarization component of the polarization multiplexed optical signal as originally transmitted;

- calculating a first Fourier transform of the first received component and a second Fourier transform of the second received component;

- multiplying the first Fourier transform by a first transfer function, multiplying the second Fourier transform by a second transfer function, adding the multiplied first Fourier transform and the multiplied second Fourier transform thereby providing a demultiplexed Fourier transform and retrieving the first polarization component by applying an inverse Fourier transform operation to the demultiplexed Fourier transform; and

- retroactively updating the first transfer function and the second transfer function, according to the retrieved first polarization component, the first received component and the second received component.

**Brief description of the drawings**

Embodiments of the invention will be better understood by reading the following detailed description, given by way of example and not of limitation, to be read with reference to the accompanying drawings, wherein:

- Figure 1 schematically shows a block diagram of a coherent optical receiver;
- Figure 2 schematically shows a block diagram of a polarization demultiplexer comprised within the coherent optical receiver of Figure 1, according to an embodiment of the present invention;
- Figure 3 schematically shows a block diagram of a polarization demultiplexer comprised within the coherent optical receiver of Figure 1; according to an advantageous variant; and
- Figure 4 schematically shows a block diagram of the known polarization demultiplexer described above.

**Detailed description of preferred embodiments of the invention**

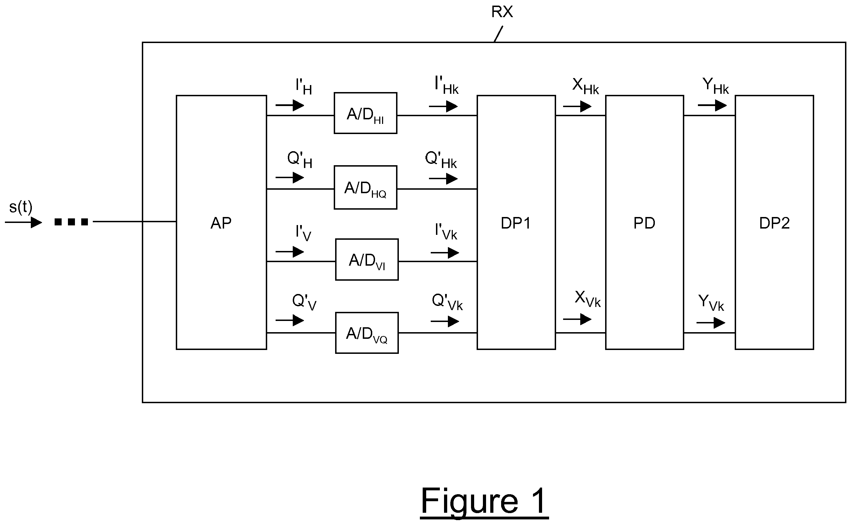

Figure 1 shows a block diagram of a coherent optical receiver RX for a node (not shown in the drawings) of an optical communication network, according to a preferred embodiment of the present invention.

The coherent optical receiver RX preferably comprises an analog portion AP, a horizontal in-phase analog-to-digital converter $A/D_{HI}$, a horizontal quadrature analog-to-digital converter $A/D_{HQ}$, a vertical in-phase analog-to-digital converter $A/D_{VI}$, a vertical quadrature analog-to-digital converter $A/D_{VQ}$, a first digital portion DP1, a polarization demultiplexer PD and a second digital portion DP2. The coherent optical receiver RX may comprise other modules that are not shown in the drawings, as they are not relevant to the present description.

The analog portion AP preferably has an input and four outputs. The input of the analog portion AP substantially corresponds to the input of the coherent optical receiver RX. The four outputs of the analog portion AP are preferably connected to the analog-to-digital converters $A/D_{HI}$, $A/D_{HQ}$, $A/D_{VI}$ and $A/D_{VQ}$.

The first digital portion DP1 preferably has four inputs and two outputs. The outputs of the analog-to-digital converters $A/D_{HI}$, $A/D_{HQ}$, $A/D_{VI}$ and $A/D_{VQ}$ are preferably connected to the inputs of the first digital portion DP1.

The polarization demultiplexer PD preferably has two inputs and two outputs. The outputs of the first digital portion DP1 are preferably connected to the inputs of the polarization demultiplexer PD. The second digital portion DP2 has two inputs, which are preferably connected to the outputs of the polarization demultiplexer PD.

When a polarization multiplexed modulated optical signal s(t) is received at the input of the coherent optical receiver RX, it is provided at the input of the analog portion AP. The analog portion AP preferably generates a local optical carrier $\cos(2\pi ft)$ having frequency substantially equal to the frequency f of the polarization multiplexed modulated optical signal s(t). Then, the analog portion AP preferably separates the horizontal and vertical components $s'_H(t)$, $s'_V(t)$ of the received polarization multiplexed modulated optical signal and separately combines each of them with the local optical carrier $\cos(2\pi ft)$. Then, the analog portion AP preferably performs a photoelectric conversion of the resulting optical signals thereby deriving the above mentioned in-phase components $I'_H$, $I'_V$ and quadrature components $Q'_H$, $Q'_V$ in the form of electrical signals.

The analog-to-digital converters $A/D_{HI}$, $A/D_{HQ}$, $A/D_{VI}$ and $A/D_{VQ}$ preferably receive the components $I'_H$, $Q'_H$, $I'_V$ and $Q'_V$, respectively, and sample them thereby providing a sequence of horizontal in-phase samples $I'_{Hk}$, a sequence of horizontal quadrature samples $Q'_{Hk}$, a sequence of vertical in-phase samples $I'_{Vk}$ and a sequence of vertical quadrature samples $Q'_{Vk}$.

Then, the first digital portion DP1 preferably receives the horizontal samples $I'_{Hk}$ and $Q'_{Hk}$ and performs a complex addition thereof, thereby providing at its output horizontal complex samples $X_{Hk}$ according to the above equation [3a], i.e.:

$$X_{Hk} = I'_{Hk} + i \, Q'_{Hk}. \qquad\qquad [3a]$$

Substantially at the same time, the first digital portion DP1 preferably receives the vertical samples $I'_{Vk}$ and $Q'_{Vk}$ and performs a complex addition thereof, thereby providing at its output vertical complex samples $X_{Vk}$ according to the above equation [3b], i.e.:

$$X_{Vk} = I'_{Vk} + i \, Q'_{Vk}. \qquad\qquad [3b]$$

Preferably, the polarization demultiplexer PD receives the complex samples $X_{Hk}$ and $X_{Vk}$ and processes them for compensating the effects of PDM, thereby providing at its output demultiplexed horizontal complex samples $Y_{Hk}$ and demultiplexed vertical complex samples $Y_{Vk}$, as it will be described in detail herein after.

Then, polarization demultiplexer PD preferably forwards the demultiplexed complex samples $Y_{Hk}$ and $Y_{Vk}$ to the second digital portion DP2, that processes them for retrieving the digital data streams originally transmitted. The operation of the second digital portion DP2 depends on the type of digital modulation applied to the polarization multiplexed modulated optical signal s(t), and will not be described in further detail, since it is not relevant to the present description.

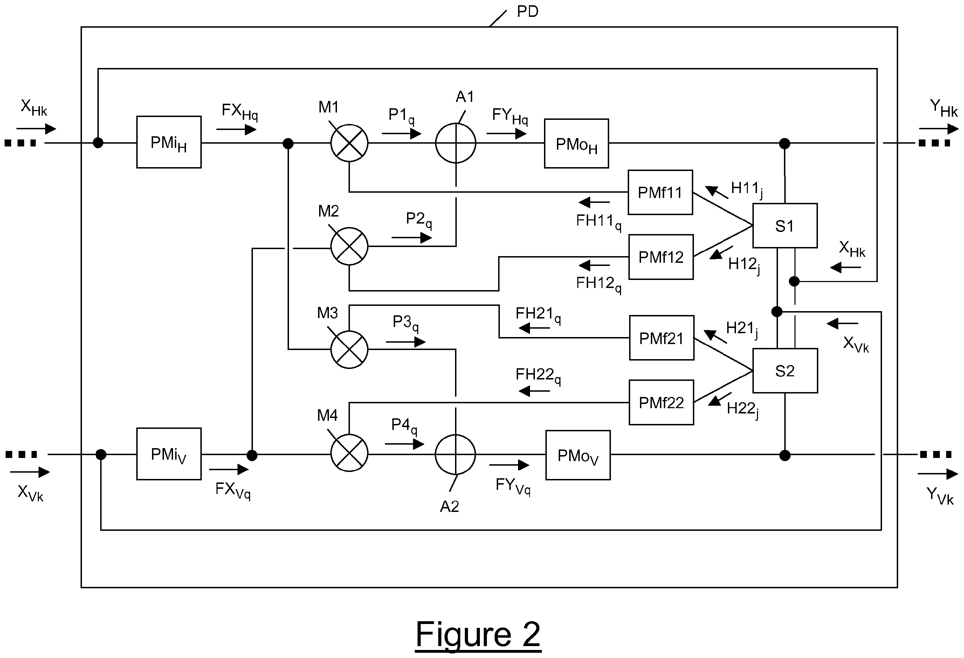

With reference to Figure 2, the polarization demultiplexer PD according to a preferred embodiment of the present invention will be now described in detail.

According to this preferred embodiment, the polarization demultiplexer PD preferably comprises a horizontal input processing module $PMi_H$, a vertical input processing module $PMi_V$, a first multiplication module M1, a second multiplication module M2, a third multiplication module M3, a fourth multiplication module M4, a first addition module A1, a second addition module A2, a horizontal output processing module $PMo_H$, a vertical output processing module $PMo_V$, a first supervisor S1, a second supervisor S2, a first feedback processing module PMf11, a second feedback processing module PMf12, a third feedback processing module PMf21 and a fourth feedback processing module PMf22.

In particular, the inputs of the input processing modules $PMi_H$ and $PMi_V$ correspond to the inputs of the polarization demultiplexer PD. The output of the module $PMi_H$ is connected to one of the inputs of the first multiplication module M1 and to one of the inputs of the third multiplication module M3. Similarly, the output of the module $PMi_V$ is connected to one of the inputs of the second multiplication module M2 and to one of the inputs of the fourth multiplication module M4. The outputs of the multiplication modules M1 and M2 are connected to the inputs of the first addition module A1, while the outputs of the multiplication modules M3 and M4 are connected to the inputs of the second addition module A2. The output of the first addition module A1 is connected to the input of the horizontal output processing module $PMo_H$ and similarly the output of the second addition module A2 is connected to the input of the vertical output processing module $PMo_V$. The outputs of the output processing modules $PMo_H$ and $PMo_V$ basically correspond to the outputs of the polarization demultiplexer PD, and are further connected to the supervisors S1 and S2, respectively. Both the supervisors S1 and S2 are connected also to the inputs of the polarization demultiplexer PD.

The output of the first supervisor S1 is connected to the input of the feedback processing modules PMf11 and PMf12, while the output of the second supervisor S2 is connected to the input of the feedback processing modules PMf21 and PMf22. The outputs of the feedback processing modules PMf11, PMf12 PMf21, PMf22 are connected to the other input of the multiplication modules M1, M2, M3 and M4, respectively.

The polarization demultiplexer PD further preferably comprises a clock input (not shown in the drawings) configured to receive a clock signal from a clock unit (also not shown in the drawings) located at the coherent optical receiver RX, and to provide it to all the components of the polarization demultiplexer PD for synchronizing their operation.

Herein after, the operation of the polarization demultiplexer PD of Figure 2 will be described in detail. The following description is referred to the operation of the polarization demultiplexer PD in a clock cycle of the above mentioned clock signal. Preferably, the operations described below are periodically repeated at each clock cycle.

Preferably, during each clock cycle, the polarization demultiplexer PD receives from the first digital portion DP1 a number N of horizontal complex samples $X_{Hk}$ and a number N of corresponding vertical complex samples $X_{Vk}$. The number N preferably is an integer equal to or higher than 1.

Preferably, the horizontal input processing module $PMi_H$ receives the N horizontal complex samples $X_{Hk}$ and provides N+L-1 horizontal complex samples $X_{Hk}$, according to either the known Overlap and Add technique or the known Overlap and Save technique. For instance, according to the known Overlap and Add technique, the N+L-1 horizontal complex samples $X_{Hk}$ comprise the received N horizontal complex samples $X_{Hk}$ and L-1 zeros appended to them. Then, the horizontal input processing module $PMi_H$ preferably applies an FFT (Fast Fourier Transform) to the N+L-1 horizontal complex samples $X_{Hk}$, thereby generating N+L-1 transformed horizontal complex samples $FX_{Hq}$ (q=0, 1, ..., N+L-2) which are then forwarded to the multipliers M1 and M3.

Substantially at the same time, the vertical input processing module $PMi_V$ receives the N vertical complex samples $X_{Vk}$ and provides N+L-1 vertical complex samples $X_{Vk}$, according to either the known Overlap and Add technique or the known Overlap and Save technique. For instance, according to the known Overlap and Add technique, the N+L-1 vertical complex samples $X_{Vk}$ comprise the received N vertical complex samples $X_{Vk}$ and L-1 zeros appended to them. Then, the vertical input processing module $PMi_V$ preferably applies the FFT to the N+L-1 vertical complex samples $X_{Vk}$, thereby generating N+L-1 transformed vertical complex samples $FX_{Vq}$ (q=0, 1, ..., N+L-2) which are then forwarded to the multipliers M2 and M4.

The first multiplication module M1 (that preferably comprises N+L-1 multipliers) multiplies the N+L-1 transformed horizontal complex samples $FX_{Hq}$ by N+L-1 first transformed coefficients $FH11_q$ that are currently output by the first feedback processing module PMf11, thereby providing at its output N+L-1 first products $P1_q$:

$$P1_q = FX_{Hq} \cdot FH11_q. \qquad [5a]$$

Similarly, the second multiplication module M2 (that preferably comprises N+L-1 multipliers) multiplies the N+L-1 transformed vertical complex samples $FX_{Vq}$ by N+L-1 second transformed coefficients $FH12_q$ that are currently output by the second feedback processing module PMf12, thereby providing at its output N+L-1 second products $P2_q$:

$$P2_q = FX_{Vq} \cdot FH12_q. \qquad [5b]$$

Similarly, the third multiplication module M3 (that preferably comprises N+L-1 multipliers) multiplies the N+L-1 transformed horizontal complex samples $FX_{Hq}$ by N+L-1 third transformed coefficients $FH21_q$ that are currently output by the third feedback processing module PMf21, thereby providing at its output N+L-1 third products $P3_q$:

$$P3_q = FX_{Hq} \cdot FH21_q. \qquad [5c]$$

Similarly, the fourth multiplication module M4 (that preferably comprises N+L-1 multipliers) multiplies the N+L-1 transformed vertical complex samples $FX_{Vq}$ by the corresponding one of N+L-1 fourth transformed coefficients $FH22_q$ that are currently output by the fourth feedback processing module PMf22, thereby providing at its output N+L-1 fourth products $P4_k$:

$$P4_q = FX_{Vq} \cdot FH22_q. \qquad [5d]$$

Then, the first addition module A1 (that preferably comprises N+L-1 adders) preferably receives the N+L-1 first products $P1_q$ and the N+L-1 second products $P2_q$, adds them thereby providing N+L-1 demultiplexed transformed horizontal complex samples $FY_{Hq}$, and preferably forwards them to the horizontal output processing module $PMo_H$. Substantially at the same time, the second addition module A2 (that preferably comprises N+L-1 adders) preferably receives the N+L-1 third products P3q and the N+L-1 products P4q, adds them thereby providing N+L-1 demultiplexed transformed vertical complex samples $FY_{Vq}$ and preferably forwards them to the vertical output processing module $PMo_V$.

The horizontal output processing module $PMo_H$ preferably applies an IFFT (Inverse FFT) to the N+L-1 demultiplexed transformed horizontal complex samples $FY_{Hq}$ and processes them according to the known Overlap and Add technique or Overlap and Save technique, thereby providing at its output (and then at the output of the polarization demultiplexer PD) N demultiplexed horizontal complex samples $Y_{Hk}$.

Substantially at the same time, the vertical output processing module $PMo_V$ preferably applies an IFFT (Inverse FFT) to the N+L-1 demultiplexed transformed vertical complex samples $FY_{Vq}$ and processes them according to the known Overlap and Add technique or Overlap and Save technique, thereby providing at its output (and then at the output of the polarization demultiplexer PD) N demultiplexed vertical complex samples $Y_{Vk}$.

Moreover, preferably, the N demultiplexed horizontal complex samples $Y_{Hk}$ are received by the first supervisor S1 together with the N horizontal complex samples $X_{Hk}$ and the N vertical complex samples $X_{Vk}$. The first supervisor S1 preferably applies a supervisor algorithm. Preferably, the supervisor algorithm is the known Constant-Modulus Algorithm (CMA).

In particular, the first supervisor S1 processes the N demultiplexed horizontal complex samples $Y_{Hk}$ and the N horizontal complex samples $X_{Hk}$ for calculating N first updating factors according to the known CMA technique. Then, the first supervisor S1 preferably averages these N first updating factors, thereby obtaining a first average updating factor AU11. Then, the first supervisor S1 preferably uses the first average updating factor AU11 to update L first

coefficients $H11_j$ (j=0, 1, ... L-1) according to the following equation:

$$H11_j[n]= H11_j[n-1]+ AU11, \hspace{3cm} [6a]$$

where $H11_j[n-1]$ are the L first coefficients computed by the first supervisor S1 at the end of the previous clock cycle and $H11_j[n]$ are the L first coefficients updated during the current clock cycle.

Similarly, the first supervisor S1 processes the N demultiplexed horizontal complex samples $Y_{Hk}$ and the N vertical complex samples $X_{Vk}$ for calculating N second updating factors according to the known CMA technique. Then, the first supervisor S1 preferably averages these N second updating factors, thereby obtaining a second average updating factor AU12. Then, the first supervisor S1 preferably uses the second average updating factor AU12 to update L second coefficients $H12_j$ (j=0, 1, ... L-1) according to the following equation:

$$H12_j[n]= H12_j[n-1]+ AU12, \hspace{3cm} [6b]$$

where $H12_j[n-1]$ are the L second coefficients computed by the first supervisor S1 at the end of the previous clock cycle and $H12_j[n]$ are the L second coefficients updated during the current clock cycle.

Substantially at the same time, the N demultiplexed vertical complex samples $Y_{Vk}$ are received by the second supervisor S2 together with the N horizontal complex samples $X_{Hk}$ and the N vertical complex samples $X_{Vk}$. Also the second supervisor S2 preferably applies a supervisor algorithm. Preferably, the supervisor algorithm is the known Constant-Modulus Algorithm (CMA).

In particular, the second supervisor S2 processes the N demultiplexed vertical complex samples $Y_{Vk}$ and the N horizontal complex samples $X_{Hk}$ for calculating N third updating factors according to the known CMA technique. Then, the second supervisor S2 preferably averages these N third updating factors, thereby obtaining a third average updating factor AU21. Then, the second supervisor S2 preferably uses the third average updating factor AU21 to update L third coefficients $H21_j$ (j=0, 1, ... L-1) according to the following equation:

$$H21_j[n]= H21_j[n-1]+ AU21 \hspace{3cm} [6c]$$

where $H21_j[n-1]$ are the L third coefficients computed by the second supervisor S2 at the end of the previous clock cycle and $H21_j[n]$ are the L third coefficients updated during the current clock cycle.

Similarly, the second supervisor S2 processes the N demultiplexed vertical complex samples $Y_{Vk}$ and the N vertical complex samples $X_{Vk}$ for calculating N fourth updating factors according to the known CMA technique. Then, the second supervisor S2 preferably averages these N fourth updating factors, thereby obtaining a fourth average updating factor AU22. Then, the second supervisor S2 preferably uses the fourth average updating factor AU22 to update L fourth coefficients $H22_j$ (j=0, 1, ... L-1) according to the following equation:

$$H22_j[n]= H22_j[n-1]+ AU22 \hspace{3cm} [6d]$$

where $H22_j[n-1]$ are the L fourth coefficients computed by the second supervisor S2 at the end of the previous clock cycle and $H22_j[n]$ are the L fourth coefficients updated during the current clock cycle.

It is to be noticed that the coefficients $H11_j$, $H12_j$, $H21_j$, $H22_j$ computed by the supervisors S1 and S2 correspond to the coefficients of the impulsive responses of the filters F1, F2, F3 and F4 shown in Figure 4. Advantageously, in the polarization demultiplexer of Figure 2, the coefficients $H11_j$, $H12_j$, $H21_j$, $H22_j$ are updated using updating factors AU11, AU12, AU21 and AU22 that are obtained by averaging the N updating factors relating to N consecutive samples received within a same clock cycle.

Advantageously, using a single average updating factor allows to update the coefficients only once within each clock cycle. Moreover, advantageously, the inventors have noticed that averaging the updating factors over the N samples and then using the average updating factor for updating the coefficients makes the computation more immune to noise with respect to sample by sample updating. According to embodiments not shown in the drawings, the average updating factors may be calculated once per a number equal to or higher than 2 of clock cycles.

Then, the first supervisor S1 preferably forwards the L first coefficients $H11_j[n]$ to the first feedback processing module PMf11 and the L second coefficients $H12_j[n]$ to the second feedback processing module PMf12. Substantially at the same time, the second supervisor S2 preferably forwards the L third coefficients $H21_j[n]$ to the third feedback processing module PMf21 and the L fourth coefficients H22$_j$[n] to the fourth feedback processing module PMf22.

The feedback processing modules PMf11, PMf12, PMf21 and PMf22 preferably receive the L coefficients H11$_j$[n], H12$_j$[n], H21$_j$[n] and H22$_j$[n], respectively, and provide N+L-1 coefficients H11$_j$[n], H12$_j$[n], H21$_j$[n] and H22$_j$[n], according to either the known Overlap and Add technique or the known Overlap and Save technique. For instance, according to the known Overlap and Add technique, the N+L-1 coefficients H11$_j$[n], H12$_j$[n], H21$_j$[n] and H22$_j$[n] comprise the L coefficients H11$_j$[n], H12$_j$[n], H21$_j$[n] and H22$_j$[n] and N-1 zeros appended to them. Then, the feedback processing modules PMf11, PMf12, PMf21 and PMf22 preferably apply the FFT to the N+L-1 coefficients H11$_j$[n], H12$_j$[n], H21$_j$[n] and H22$_j$[n], respectively, thereby generating N+L-1 first transformed complex coefficients FH11$_q$, N+L-1 second transformed complex coefficients FH12$_q$, N+L-1 third transformed complex coefficients FH21$_q$ and N+L-1 fourth transformed complex coefficients FH22$_q$ (q=0, 1, ... N+L-2). The transformed complex coefficients FH11$_q$, FH12$_q$, FH21$_q$ and FH22$_q$ are then forwarded to the multiplication modules M1, M2, M3 and M4. The multiplication modules M1, M2, M3 and M4 preferably use the transformed complex coefficients FH11$_q$, FH12$_q$, FH21$_q$ and FH22$_q$ to multiply the transformed complex samples FX$_{Hq}$ and FX$_{Vq}$ that will be received during the next clock cycle according to the above equations [5a]-[5d].

Therefore, differently from the polarization demultiplexer shown in Figure 4, in the polarization demultiplexer of Figure 2 the FIR filters F1, F2, F3, F4 are implemented in the frequency domain. Indeed, the N horizontal and vertical samples received in parallel are firstly transformed in the frequency domain, and then multiplied by the transformed coefficients FH11$_q$, FH12$_q$, FH21$_q$, FH22$_q$ in the multiplication modules M1, M2, M3, M4. This operation performed in the frequency domain basically corresponds to an operation of convolving in time L consecutive samples with the impulsive responses of the filters F1, F2, F3, F4 shown in Figure 4, whose coefficients H11$_j$, H12$_j$, H21$_j$, H22$_j$ are calculated by the supervisors S1, S2. Hence, the polarization demultiplexer PD basically performs the same operation as the polarization demultiplexer of Figure 4.

However, advantageously, the polarization demultiplexer PD described above is much simpler (and therefore much cheaper) than the polarization demultiplexer of Figure 4, since it requires a reduced amount of multipliers.

Indeed, while as mentioned above each filter of the polarization demultiplexer of Figure 4 comprises L multipliers per sample, each "filter" implemented in frequency domain (i.e. the ensemble of an input processing module, a multiplication module and an output processing module) comprises (N+L-1) (1+log$_2$(N+L-1))/N multipliers per sample.

Therefore, while the polarization demultiplexer of Figure 4 comprises 4L multipliers per sample, the polarization demultiplexer PD of Figure 2 requires nearly (N+L-1)x[4+4xlog$_2$(N+L-1)]/(2N) multipliers per sample. Indeed, each of the input processing modules PMi$_H$, PMi$_V$, the output processing modules PMo$_H$, PMov and the feedback processing modules PMf11, PMf12, PMf21, PMf22 comprises nearly (N+L-1)/2xlog$_2$(N+L-1)/(2N) multiplications per sample, while each of the multiplication modules M1, M2, M3, M4 comprises (N+L-1)/(2N) multiplications per sample. As an example, if N=L=128 the polarization demultiplexer of Figure 4 comprises 4x128=512 multipliers per sample, while advantageously the polarization demultiplexer PD of Figure 2 comprises only about 36 multipliers per sample.

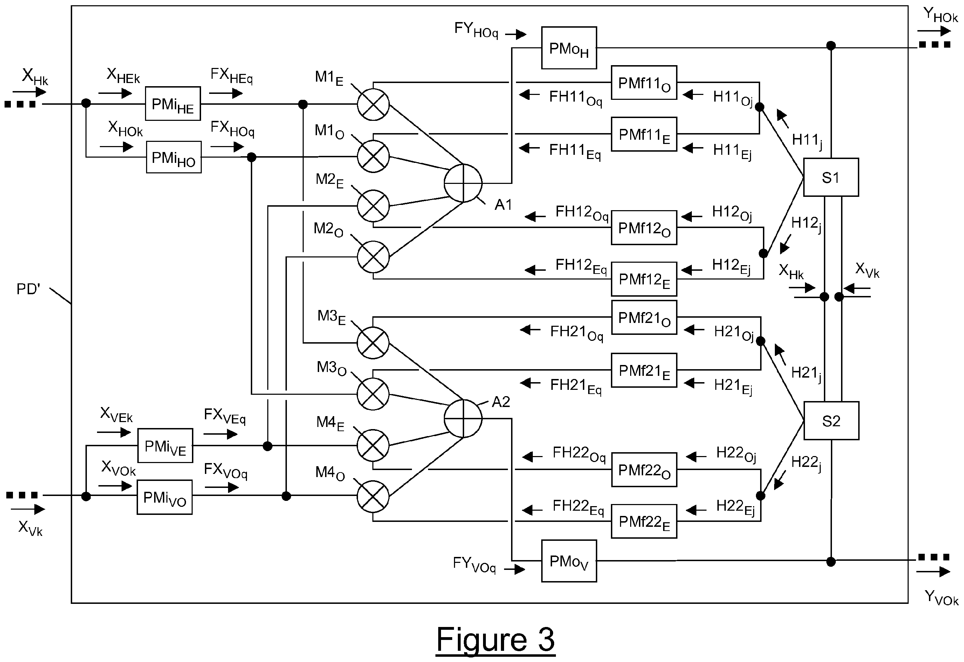

With reference to Figure 3, a polarization demultiplexer PD' according to an advantageous variant will be now described in detail.

The inventors have noticed that, in some cases, in an coherent optical receiver, only half of the demultiplexed horizontal complex samples Y$_{Hk}$ and half of the demultiplexed vertical complex samples Y$_{Vk}$ provided at the output of a polarization demultiplexer suitable for compensating PMD are needed. This is the case for instance when the sampling rate at the analog-to-digital converters A/D$_{HI}$, A/D$_{HQ}$, A/D$_{VI}$, A/D$_{VQ}$ is nearly twice the symbol rate, the odd samples being taken at about half the symbol periods and the even samples being taken at the edge between consecutive symbol periods. In that case, for recovering the original digital data streams, only the odd samples taken at the about half the symbol periods are useful.

Generally speaking, the transfer function H(z) of a filter may be expressed by the following equation:

$$H(z) = H_E(z^2) + z^{-1} H_O(z^2). \qquad [7]$$

The output of the filter may then be expressed by the following equation:

$$Y(z) = X(z) \cdot H(z) = \left( X_E(z^2) + z^{-1} X_O(z^2) \right) \left( H_E(z^2) + z^{-1} H_O(z^2) \right) \qquad [8]$$

where X(z) is the Z-transform of a sequence of input samples, X$_E$(z) is the Z-transform of the even input samples and X$_O$(z) is the Z-transform of the odd input samples.

From equation [8] it follows that:

$$Y_E(z^2) = X_E(z^2)H_E(z^2) + z^{-2}X_O(z^2)H_O(z^2) \qquad [9a]$$

and

$$Y_O(z^2) = X_O(z^2)H_E(z^2) + X_E(z^2)H_O(z^2) \qquad [9b]$$

where $Y_E(z^2)$ is the Z-transform of the even output samples and $Y_O(z^2)$ is the Z-transform of the odd output samples.

Therefore, when only the odd (or even) output samples are needed at the output of a filter, it is not necessary implementing the whole equation [8], but it is sufficient implementing the above equation [9b] (or [9a]).

The polarization demultiplexer PD' shown in Figure 3 is advantageously configured to compute only one half of the demultiplexed horizontal complex samples $Y_{Hk}$ and half of the demultiplexed vertical complex samples $Y_{Vk}$, based on the above principle. By way of non limiting example, it is assumed that the polarization demultiplexer PD' is configured to compute the odd demultiplexed horizontal complex samples $Y_{HOk}$ and the odd demultiplexed vertical complex samples $Y_{VOk}$.

The structure of the polarization demultiplexer PD' is similar to the structure of the polarization demultiplexer PD of Figure 2, except for the fact that:

- the module $PMi_H$ is replaced by an even horizontal input processing module $PMi_{HE}$ and an odd horizontal input processing module $PMi_{HO}$;
- the module $PMi_V$ is replaced by an even vertical input processing module $PMi_{VE}$ and an odd vertical input processing module $PMi_{VO}$;
- each multiplication module M1, M2, M3, M4 is replaced by a couple of even and odd multiplication modules $M1_E$ and $M1_O$, $M2_E$ and $M2_O$, $M3_E$ and $M3_O$, $M4_E$ and $M4_O$;
- each module PMf11, PMf12, PMf21, PMf22 is replaced by a couple of even and odd feedback processing modules $PMf11_E$ and $PMf11_O$, $PMf12_E$ and $PMf12_O$, $PMf21_E$ and $PMf21_O$, $PMf22_E$ and $PMf22_O$.

In the following, the operation of the polarization demultiplexer PD' of Figure 3 will be described in detail. Again, the following description is referred to the operation of the polarization demultiplexer PD' in a clock cycle of the clock signal generated at the coherent optical receiver RX. Preferably, the operation described below is periodically repeated at each clock cycle.

At each clock cycle, the polarization demultiplexer PD' preferably receives N horizontal complex samples $X_{Hk}$ and N vertical complex samples $X_{Vk}$.

Preferably, the N horizontal complex samples $X_{Hk}$ are divided in N/2 even horizontal complex samples $X_{HEk}$ and N/2 odd horizontal complex samples $X_{HOk}$, while the N vertical complex samples $X_{Vk}$ are divided in N/2 even vertical complex samples $X_{VEk}$ and N/2 odd vertical complex samples $X_{VOk}$.

The modules $PMi_{HE}$, $PMi_{HO}$, $PMi_{VE}$ and PMivo preferably receive the N/2 complex samples $X_{HEk}$, $X_{HOk}$, $X_{VEk}$ and $X_{VOk}$, respectively, and provide N/2+L/2-1 even horizontal complex samples $X_{HEk}$, N/2+L/2-1 odd horizontal complex samples $X_{HOk}$, N/2+L/2-1 even vertical complex samples $X_{VEk}$ and N/2+L/2-1 odd vertical complex samples $X_{VOk}$, according to either the known Overlap and Add technique or the known Overlap and Save technique. For instance, according to the known Overlap and Add technique, the N/2+L/2-1 complex samples $X_{HEk}$, $X_{HOk}$, $X_{VEk}$ and $X_{VOk}$ comprise the received N/2 complex samples $X_{HEk}$, $X_{HOk}$, $X_{VEk}$ and $X_{VOk}$ and L/2-1 zeros appended to them. Then, the modules $PMi_{HE}$ $PMi_{HO}$, $PMi_{VE}$ and $PMi_{VO}$ preferably apply the FFT to the N/2+L/2-1 complex samples $X_{HEk}$, $X_{HOk}$, $X_{VEk}$ and $X_{VOk}$, respectively, thereby generating N/2+L/2-1 even transformed horizontal complex samples $FX_{HEq}$, N/2+L/2-1 odd transformed horizontal complex samples $FX_{HOq}$, N/2+L/2-1 even transformed vertical complex samples $FX_{VEq}$ and N/2+L/2-1 odd transformed vertical complex samples $FX_{VOq}$ (q=0, 1, ... N/2+L/2-2).

The multiplication modules $M1_E$, $M1_O$, $M2_E$ and $M2_O$ (each preferably comprising N/2+L/2-1 multipliers) multiply the N/2+L/2-1 transformed complex samples $FX_{HEq}$, $FX_{HOq}$, $FX_{VEq}$ and $FX_{VOq}$ by N/2+L/2-1 odd first transformed coefficients $FH11_{Oq}$, N/2+L/2-1 even first transformed coefficients $FH11_{Eq}$, N/2+L/2-1 odd second transformed coefficients $FH12_{Oq}$ and N/2+L/2-1 even second transformed coefficients $FH12_{Eq}$, respectively, that are currently output by the feedback processing modules $PMf11_O$, $PMf11_E$, $PMf12_O$ and $PMf12_E$, and forward the results to the first addition module A1.

The first addition module A1 finally adds the results received from the multiplication modules $M1_E$, $M1_O$, $M2_E$, $M2_O$ thereby providing N/2+L/2-1 odd demultiplexed transformed horizontal complex samples $FY_{HOq}$ and forwards them to the horizontal output processing module $PMo_H$.

Substantially at the same time, the multiplication modules $M3_E$, $M3_O$, $M4_E$ and $M4_O$ (each preferably comprising N/2+L/2-1 multipliers) multiply the N/2+L/2-1 transformed complex samples $FX_{HEq}$, $FX_{HOq}$, $FX_{VEq}$ and $FX_{VOq}$ by N/2+L/2-1 odd third transformed coefficients $FH21_{Oq}$, N/2+L/2-1 even third transformed coefficients $FH21_{Eq}$, N/2+L/2-1 odd fourth transformed coefficients $FH22_{Oq}$ and N/2+L/2-1 even fourth transformed coefficients $FH22_{Eq}$, respectively, that are currently output by the feedback processing modules $PMf21_O$, $PMf21_E$, $PMf22_O$ and $PMf22_E$, and forward the results to the second addition module A2.

The second addition module A2 finally adds the results received from the multipliers $M3_E$, $M3_O$, $M4_E$, $M4_O$ thereby providing N/2+L/2-1 odd demultiplexed transformed vertical complex samples $FY_{VOq}$ and forwards them to the vertical output processing module $PMo_V$.

The horizontal output processing module $PMo_H$ preferably applies the IFFT to the N/2+L/2-1 odd demultiplexed transformed horizontal complex samples $FY_{HOq}$ and processes them according to the known Overlap and Add technique or Overlap and Save technique, thereby providing at its output (and then at the output of the polarization demultiplexer PD') N/2 odd demultiplexed horizontal complex samples $Y_{HOk}$, that basically correspond to the odd samples of the demultiplexed horizontal complex samples $Y_{Hk}$ output by the polarization demultiplexer PD of Figure 2.

Substantially at the same time, the vertical output processing module $PMo_V$ preferably applies the IFFT to the N/2+L/2-1 odd demultiplexed transformed vertical complex samples $FY_{VOq}$ and processes them according to the known Overlap and Add technique or Overlap and Save technique, thereby providing at its output (and then at the output of the polarization demultiplexer PD') N/2 odd demultiplexed vertical complex samples $Y_{VOk}$, that basically correspond to the odd samples of the demultiplexed vertical complex samples $Y_{Vk}$ output by the polarization demultiplexer PD of Figure 2.

Moreover, preferably, the N/2 odd demultiplexed horizontal complex samples $Y_{HOk}$ are received by the first supervisor S1 together with the N horizontal complex samples $X_{Hk}$ and the N vertical complex samples $X_{Vk}$. The first supervisor S1 preferably uses them for updating L first coefficients $H11_j$ (j=0,1, ... L-1) and L second coefficients $H12_j$ (j=0,1, ... L-1). The updating is similar to the updating performed by the polarization demultiplexer of Figure 2. A detailed description therefore will not be repeated.

Substantially at the same time, the N/2 odd demultiplexed vertical complex samples $Y_{VOk}$ are received by the second supervisor S2 together with the N horizontal complex samples $X_{Hk}$ and the N vertical complex samples $X_{Vk}$. The second supervisor S2 preferably uses them for updating L third coefficients $H21_j$ (j=0,1, ... L-1) and L fourth coefficients $H22_j$ (j=0,1, ... L-1). The updating is similar to the updating performed by the polarization demultiplexer of Figure 2. A detailed description therefore will not be repeated.

The L first coefficients $H11_j$ output by the first supervisor S1 are then preferably split in L/2 even first coefficients $H11_{Ej}$ and L/2 odd first coefficients $H11_{Oj}$, and the L second coefficients $H12_j$ output by the first supervisor S1 are preferably split in L/2 even second coefficients $H12_{Ej}$ and L/2 odd second coefficients $H12_{Oj}$. Substantially at the same time, the L third coefficients $H21_j$ output by the second supervisor S2 are preferably split in L/2 even third coefficients $H2I_{Ej}$ and L/2 odd third coefficients $H21_{Oj}$, and the L fourth coefficients $H22_j$ output by the second supervisor S2 are preferably split in L/2 even fourth coefficients $H22_{Ej}$ and L/2 odd fourth coefficients $H22_{Oj}$.

The modules $PMf11_O$ and $PMf11_E$ then preferably receive the L/2 odd first coefficients $H11_{Oj}$ and the L/2 even first coefficients $H11_{Ej}$ and provide N/2+L/2-1 odd first coefficients $H11_{Oj}$ and N/2+L/2-1 even first coefficients $H11_{Ej}$, respectively, according to either the known Overlap and Add technique or the known Overlap and Save technique. Then, the modules $PMf11_O$ and $PMf11_E$ preferably apply the FFT to the N/2+L/2-1 odd first coefficients $H11_{Oj}$ and to the N/2+L/2-1 even first coefficients $H11_{Ej}$, thereby generating N/2+L/2-1 odd first transformed complex coefficients $FH11_{Oq}$ and N/2+L/2-1 even first transformed complex coefficients $FH11_{Eq}$, which are then forwarded to the multiplication modules $M1_E$ and $M1_O$, respectively. The multiplication modules $M1_E$ and $M1_O$ preferably use the coefficients $FH11_{Oq}$ and $FH11_{Eq}$ to multiply the even transformed horizontal complex samples $FX_{HEq}$ and the odd transformed horizontal complex samples $FX_{HOq}$ that will be received during the next clock cycle.

Similarly, the modules $PMf12_O$ and $PMf12_E$ preferably receive the L/2 odd second coefficients $H12_{Oj}$ and the L/2 even second coefficients $H12_{Ej}$ and provide N/2+L/2-1 odd second coefficients $H12_{Oj}$ and N/2+L/2-1 even second coefficients $H12_{Ej}$, respectively, according to either the known Overlap and Add technique or the known Overlap and Save technique. Then the modules $PMf12_O$ and $PMf12_E$ preferably apply the FFT to the N/2+L/2-1 odd second coefficients $H12_{Oj}$ and the N/2+L/2-1 even second coefficients $H12_{Ej}$ thereby generating N/2+L/2-1 odd second transformed complex coefficients $FH12_{Oq}$ and N/2+L/2-1 even second transformed complex coefficients $FH12_{Eq}$, which are then forwarded to the multiplication modules $M2_E$ and $M2_O$, respectively. The multiplication modules $M2_E$ and $M2_O$ preferably use the coefficients $FH12_{Oq}$ and $FH12_{Eq}$ to multiply the even transformed vertical complex samples $FX_{VEq}$ and the odd transformed vertical complex samples $FX_{VOq}$ that will be received during the next clock cycle.

Similarly, the modules $PMf21_O$ and $PMf21_E$ preferably receive the L/2 odd third coefficients $H21_{Oj}$ and the L/2 even third coefficients $H21_{Ej}$ and provide N/2+L/2-1 odd third coefficients $H21_{Oj}$ and N/2+L/2-1 even third coefficients $H21_{Ej}$, respectively, according to either the known Overlap and Add technique or the known Overlap and Save technique. Then, the modules $PMf21_O$ and $PMf21_E$ preferably apply the FFT to the N/2+L/2-1 odd third coefficients $H21_{Oj}$ and N/2+L/2-1 even third coefficients $H21_{Ej}$, thereby generating N/2+L/2-1 odd third transformed complex coefficients $FH21_{Oq}$

and N/2+L/2-1 even third transformed complex coefficients FH21$_{Eq}$, which are then forwarded to the multiplication modules M3$_E$ and M3$_O$, respectively. The multiplication modules M3$_E$ and M3$_O$ preferably use the coefficients FH21$_{Oq}$ and FH21$_{Eq}$ to multiply the even transformed horizontal complex samples FX$_{HEq}$ and the odd transformed horizontal complex samples FX$_{HOq}$ that will be received during the next clock cycle.

Similarly, the modules PMf22$_O$ and PMf22$_E$ preferably receive the L/2 odd fourth coefficients H22$_{Oj}$ and the L/2 even fourth coefficients H22$_{Ej}$ and provide N/2+L/2-1 odd fourth coefficients H22$_{Oj}$ and N/2+L/2-1 even fourth coefficients H22$_{Ej}$, respectively, according to either the known Overlap and Add technique or the known Overlap and Save technique. Then, the modules PMf22$_O$ and PMf22$_E$ preferably apply the FFT to the N/2+L/2-1 odd fourth coefficients H22$_{Oj}$ and N/2+L/2-1 even fourth coefficients H22$_{Ej}$, thereby generating N/2+L/2-1 odd fourth transformed complex coefficients FH22$_{Oq}$ and N/2+L/2-1 even fourth transformed complex coefficients FH22$_{Eq}$, which are then forwarded to the multiplication modules M4$_E$ and M4$_O$, respectively. The multiplication modules M4$_E$ and M4$_O$ preferably use the coefficients FH22$_{Oq}$ and FH22$_{Eq}$ to multiply the even transformed vertical complex samples FX$_{VEk}$ and the odd transformed vertical complex samples FX$_{VOk}$ that will be received during the next clock cycle.

Advantageously, as mentioned above, the polarization demultiplexer PD' according to this advantageous variant can be used when only half of the samples (e.g. the odd samples) are needed at the output of the polarization demultiplexer PD'. This is the case for instance when the sampling rate at the analog-to-digital converters A/D$_{HI}$, A/D$_{HQ}$, A/D$_{VI}$, A/D$_{VQ}$ is nearly twice the symbol rate, the odd samples being taken at about half the symbol periods and the even samples being taken at the edge between consecutive symbol periods. In that case, for recovering the original digital data streams, only the odd samples taken at about half the symbol periods are useful.

The polarization demultiplexer PD' is advantageously simpler than the polarization demultiplexer of Figure 4. Indeed, each of the input processing modules, the output processing modules and the feedback processing modules implementing the FFT or IFFT computation comprises (N/2+L/2-1)/2xlog2(N/2+L/2-1)/N multipliers per sample, while each of the multiplication modules comprises (N/2+L/2-1)/N multipliers per sample. Hence, the polarization demultiplexer PD' of Figure 3 as a whole comprises nearly (N/2+L/2-1)x[8+7xlog$_2$(N/2+L/2-1)]/N multipliers per sample. Considering the same example mentioned above, if N=L=128 the polarization demultiplexer of Figure 3 advantageously comprises nearly 57 multipliers per sample, and thus less than the number of multipliers per sample comprised in a polarization demultiplexer similar to that of Figure 4 and configured to calculate only half of the samples (that may be obtained by removing substantially half of the circuit of Figure 4, and hence comprises 256 multipliers). Further, advantageously, using the polarization demultiplexer PD' avoids use of a decimator located downstream the polarization demultiplexer, since only the useful half of the samples is output by the polarization demultiplexer PD'.

The functions of the various elements shown in Figure 2 or in Figure 3 may be provided through the use of dedicated hardware, programmable hardware or a hardware capable of executing software in association with appropriate software. In particular, the functions of the various elements shown in Figure 2 or in Figure 3 are preferably provided through the use of one or more application specific integrated circuits (ASIC) and/or one or more field programmable gate arrays (FPGA). Preferably, the functions of the various elements shown in Figure 2 or in Figure 3 are provided through the use of a single ASIC or a single FPGA. Therefore, the expressions "first circuit", "second circuit" and "third circuit" mentioned in the claims are to be understood merely as functional aggregations of the elements of the polarization demultiplexer PD, and they should not be understood necessarily as physically separated circuits implemented on separated hardware devices.

**Claims**

1. A coherent optical receiver (RX) for an optical communication network, said coherent optical receiver (RX) being configured to receive a polarization multiplexed optical signal (s(t)) and to process it for generating a first received component (X$_{Hk}$) and a second received component (X$_{Vk}$), each of said first received component (X$_{Hk}$) and said second received component (X$_{Vk}$) comprising a mixing of a first polarization component (Y$_{Hk}$; Y$_{HOk}$) and a second polarization component (Y$_{Vk}$; Y$_{VOk}$) of said polarization multiplexed optical signal (s(t)) as originally transmitted, said coherent optical receiver (RX) further comprising a polarization demultiplexer (PD; PD') in turn comprising:

   - a first circuit (PMi$_H$, PMi$_V$; PMi$_{HE}$, PMi$_{HO}$, PMi$_{VE}$, PMivo) configured to calculate a first Fourier transform (FX$_{Hq}$; FX$_{HEq}$) of said first received component (X$_{Hk}$) and a second Fourier transform (FX$_{Vq}$; FX$_{VEq}$) of said second received component (X$_{Vk}$);
   - a second circuit (M1, M2, A1, PMo$_H$; M1$_E$, M1$_O$, M2$_E$, M2$_O$ A1, PMo$_H$) configured to multiply said first Fourier transform (FX$_{Hq}$; FX$_{HEq}$) by a first transfer function (FH11$_q$; FH11$_{Oq}$), multiply said second Fourier transform (FX$_{Vq}$; FX$_{VEq}$) by a second transfer function (FH12$_q$; FH12$_{Oq}$) and add said multiplied first Fourier transform (P1$_q$) and said multiplied second Fourier transform (P2$_q$) thereby providing a demultiplexed Fourier transform (FY$_{Hq}$; FY$_{HOq}$), and retrieve said first polarization component (Y$_{Hk}$; Y$_{HOk}$) by applying an inverse Fourier transform operation to said demultiplexed Fourier transform ($FY_{Hq}$; $FY_{HOq}$); and
- a third circuit (S1, PMf11, PMf12; S2 , $PMf11_O$, $PMf11_E$, $PMf12_O$, $PMf12_E$) configured to retroactively update said first transfer function ($FH11q$; $FH11_{Oq}$) and said second transfer function ($FH12_q$; $FH12_{Oq}$), according to said retrieved first polarization component ($Y_{Hk}$; $Y_{HOk}$), said first received component ($X_{Hk}$) and said second received component ($X_{Vk}$).

2. The coherent optical receiver (RX) according to claim 1, wherein said first circuit ($PMi_H$, $PMi_V$; $PMi_{HE}$, $PMi_{HO}$, $PMi_{VE}$, $PMi_{VO}$) is configured to receive N first samples of said first received component ($X_{Hk}$) and N second samples of said second received component ($X_{Vk}$), N being an integer equal to or higher than 1.

3. The coherent optical receiver (RX) according to claim 2, wherein said first circuit ($PMi_H$, $PMi_V$) comprises a first input processing module ($PMi_H$) and a second input processing module ($PMi_V$), wherein:

   - said first input processing module ($PMi_H$) is configured to provide N+L-1 further first samples ($X_{Hk}$) comprising said N first samples ($X_{Hk}$) according to an overlap and add technique or an overlap and save technique; and
   - said second input processing module ($PMi_V$) is configured to provide N+L-1 further second samples ($X_{Vk}$) comprising said N second samples ($X_{Vk}$) according to an overlap and add technique or an overlap and save technique,

   L being an integer equal to or higher than 1.

4. The coherent optical receiver (RX) according to claim 3, wherein:

   - said first input processing module ($PMi_H$) is configured to calculate said first Fourier transform ($FX_{Hq}$) as N+L-1 first transformed samples ($FX_{Hq}$) by applying a Fourier transform operation to said N+L-1 further first samples ($X_{Hk}$); and
   - said second input processing module ($PMi_V$) is configured to calculate said second Fourier transform ($FX_{Vq}$) as N+L-1 second transformed samples ($FX_{Vq}$) by applying a Fourier transform operation to said N+L-1 further second samples ($X_{Vk}$).

5. The coherent optical receiver (RX) according to claim 4, wherein said second circuit (M1, M2, A1, $PMo_H$) comprises a first multiplication module (M1) and a second multiplication module (M2), wherein:

   - said first multiplication module (M1) is configured to multiply said N+L-1 first transformed samples ($FX_{Hq}$) by said first transfer function ($FH11_q$), said first transfer function ($FH11_q$) comprising N+L-1 first transformed coefficients ($FH11_q$), thereby obtaining N+L-1 first multiplied samples of said multiplied first Fourier transform ($P1_q$); and
   - said second multiplication module (M2) is configured to multiply said N+L-1 second transformed samples ($FX_{Vq}$) by said second transfer function ($FH12q$), said second transfer function ($FH12_q$) comprising N+L-1 second transformed coefficients ($FH12q$), thereby obtaining N+L-1 second multiplied samples of said multiplied second Fourier transform ($P2q$).

6. The coherent optical receiver (RX) according to claim 5, wherein said second circuit (M1, M2, A1, $PM_{OH}$) comprises an addition module (A1), said addition module (A1) being configured to add said N+L-1 first multiplied samples ($P1_q$) and said N+L-1 second multiplied samples ($P2q$), thereby obtaining N+L-1 demultiplexed transformed samples of said demultiplexed Fourier transform ($FY_{Hq}$).

7. The coherent optical receiver (RX) according to claim 6, wherein said second circuit (M1, M2, A1, $PMo_H$) comprises an output processing module ($PMo_H$) configured to apply an inverse Fourier transform operation to said N+L-1 demultiplexed transformed samples ($FY_{Hq}$) and to process them according to said overlap and add technique or said overlap and save technique, thereby providing N demultiplexed samples ($Y_{Hk}$) of said retrieved first polarization component ($Y_{Hk}$).

8. The coherent optical receiver (RX) according to claim 7, wherein said third circuit (S1, PMf11, PMf12) comprises a supervisor (S1) configured to:

   - process said N demultiplexed samples ($Y_{Hk}$), said N first samples ($X_{Hk}$) and said N second samples ($X_{Vk}$) for calculating N first updating factors and N second updating factors;

- average said N first updating factors for obtaining a first average updating factor (AU11) and said N second updating factors for obtaining a second average updating factor (AU12); and
- update L first coefficients ($H11_j$) and L second coefficients ($H12_j$) by adding to them said first average updating factor (AU11) and said second average updating factor (AU12), respectively.

9. The coherent optical receiver (RX) according to claim 8, wherein said supervisor (S1) is further configured to process said N demultiplexed samples ($Y_{Hk}$), said N first samples ($X_{Hk}$) and said N second samples ($X_{Vk}$) according to a constant-modulus algorithm.

10. The coherent optical receiver (RX) according to claim 8 or 9, wherein said third circuit (S1, PMf11, PMf12) further comprises a first feedback processing module (PMf11) and a second feedback processing module (PMf12), wherein:

- said first feedback processing module (PMf11) is configured to provide N+L-1 further first coefficients ($H11_j$) comprising said L first coefficients ($H11_j$), according to said overlap and add technique or said overlap and save technique; and
- said second feedback processing module (PMf12) is configured to provide N+L-1 further second coefficients ($H12_j$) comprising said L second coefficients ($H12_j$), according to said overlap and add technique or said overlap and save technique.

11. The coherent optical receiver (RX) according to claim 10, wherein:

- said first feedback processing module (PMf11) is configured to apply a Fourier transform operation to said N+L-1 further first coefficients ($H11_j$) thereby generating said N+L-1 first transformed coefficients ($FH11_q$); and
- said second feedback processing module (PMf12) is configured to apply a Fourier transform operation to said N+L-1 further second coefficients ($H12_j$) thereby generating said N+L-1 second transformed coefficients ($FH12_q$).

12. The coherent optical receiver (RX) according to claim 2, wherein said first circuit ($PMi_{HE}$, $PMi_{HO}$, $PMi_{VE}$, $PMi_{VO}$) is further configured to, before calculating said first Fourier transform ($FX_{HEq}$) and said second Fourier transform ($FX_{VEq}$), divide said N first samples ($X_{Hk}$) into N/2 even first samples ($X_{HEk}$) and N/2 odd first samples ($X_{HOk}$) and divide said N second samples ($X_{Vk}$) into N/2 even second samples ($X_{VEk}$) and N/2 odd first samples ($X_{VOk}$).

13. The coherent optical receiver (RX) according to claim 12, wherein said first circuit ($PMi_{HE}$, $PMi_{HO}$, $PMi_{VE}$, PMivo) is configured to:

- calculate said first Fourier transform ($FX_{HEq}$) by applying a Fourier transform operation to said N/2 even first samples ($X_{HEk}$) and calculate said second Fourier transform ($FX_{VEq}$) by applying a Fourier transform operation to said N/2 even second samples ($X_{VEk}$);
- calculate a third Fourier transform ($FX_{HOq}$) by applying a Fourier transform operation to said N/2 odd first samples ($X_{HOk}$) and calculate a fourth Fourier transform ($FX_{VOq}$) by applying a Fourier transform operation to said N/2 odd second samples ($X_{VOk}$).

14. The coherent optical receiver (RX) according to claim 13, wherein said second circuit ($M1_E$, $M1_O$, $M2_E$, $M2_O$, A1, $PMo_H$) is further configured to multiply said third Fourier transform ($FX_{HOq}$) by a third transfer function ($FH11_{Eq}$), multiply said fourth Fourier transform ($FX_{VOq}$) by a fourth transfer function ($FH12_{Eq}$) and add said multiplied first Fourier transform, said multiplied second Fourier transform, said multiplied third Fourier transform and said multiplied fourth Fourier transform thereby providing said demultiplexed Fourier transform ($FY_{HOq}$), and calculate N/2 samples of said retrieved first polarization component ($Y_{HOk}$) as an inverse Fourier transform of said demultiplexed Fourier transform ($FY_{HOq}$).

15. An optical communication network comprising a coherent optical receiver (RX) according to any of the preceding claims.

16. A method for demultiplexing a polarization multiplexed optical signal (s(t)) received at a coherent optical receiver (RX) of an optical communication network, said method comprising the following steps:

- processing said received polarization multiplexed optical signal (s(t)) for generating a first received component ($X_{Hk}$) and a second received component ($X_{Vk}$), each of said first received component ($X_{Hk}$) and said second received component ($X_{Vk}$) comprising a mixing of a first polarization component ($Y_{Hk}$; $Y_{HOk}$) and a second polarization component ($Y_{Vk}$; $Y_{VOk}$) of said polarization multiplexed optical signal (s(t)) as originally transmitted;
- calculating a first Fourier transform ($FX_{Hq}$; $FX_{HEq}$) of said first received component ($X_{Hk}$) and a second Fourier transform ($FX_{Vq}$; $FX_{VEq}$) of said second received component ($X_{Vk}$);
- multiplying said first Fourier transform ($FX_{Hq}$; $FX_{HEq}$) by a first transfer function ($FH11_q$; $FH11_{Oq}$), multiplying said second Fourier transform ($FX_{Vq}$; $FX_{VEq}$) by a second transfer function ($FH12_q$; $FH12_{Oq}$), adding said multiplied first Fourier transform ($P1_q$) and said multiplied second Fourier transform ($P2_q$) thereby providing a demultiplexed Fourier transform ($FY_{Hq}$; $FY_{HOq}$), and retrieving said first polarization component ($Y_{Hk}$; $Y_{HOk}$) by applying an inverse Fourier transform operation to said demultiplexed Fourier transform ($FY_{Hq}$; $FY_{HOq}$); and
- retroactively updating said first transfer function ($FH11_q$; $FH11_{Oq}$) and said second transfer function ($FH12_q$; $FH12_{Oq}$), according to said retrieved first polarization component ($Y_{Hk}$; $Y_{HOk}$), said first received component ($X_{Hk}$) and said second received component ($X_{Vk}$).

**Patentansprüche**

1. Kohärenter optischer Empfänger (RX) für ein optisches Kommunikationsnetzwerk, wobei der besagte, kohärente optische Empfänger (RX) konfiguriert ist für den Empfang eines polarisierungs-demultiplexten optischen Signals (s(t)) und für dessen Verarbeiten zum Zweck des Generierens einer ersten empfangenen Komponente ($X_{Hk}$) und einer zweiten empfangenen Komponente ($X_{Vk}$), wobei sowohl die erste empfangene Komponente ($X_{Hk}$) als auch die zweite empfangene Komponente ($X_{Vk}$) eine Mischung aus einer ersten Polarisierungskomponente ($Y_{Hk}$, $Y_{HOk}$) und einer zweiten Polarisierungskomponente ($Y_{Vk}$, $Y_{VOk}$) des besagten, polarisierungs-demultiplexten optischen Signals (s(t)) umfasst, so wie es ursprünglich übermittelt wurde, wobei der besagte, kohärente optische Empfänger (RX) weiterhin einen Polarisierungs-Demultiplexer (PD; PD') umfasst, der weiterhin umfasst:

   - einen ersten Schaltkreis ($PMi_H$, PMiv; $PMi_{HE}$, $PMi_{HO}$, $PMi_{VE}$, $PMi_{VO}$), der konfiguriert ist für das Berechnen einer ersten Fourier-Transformation ($FX_{Hq}$; $FX_{HEq}$) der besagten ersten empfangenen Komponente ($X_{Hk}$) und einer zweiten Fourier-Transformation ($FX_{Vq}$; $FX_{VEq}$) der besagten zweiten empfangenen Komponente ($X_{Vk}$);
   - einen zweiten Schaltkreis (M1, M2, A1, $PM_{OH}$; $M1_E$, $M1_O$, $M2_E$, $M2_O$ A1, $PM_{OH}$), der konfiguriert ist für das Vervielfachen der besagten ersten Fourier-Transformation ($FX_{Hq}$; $FX_{HEq}$) durch eine erste Transferfunktion ($FH11_q$; $FH11_{Oq}$), für das Vervielfachen der besagten zweiten Fourier-Transformation ($FX_{Vq}$; $FX_{VEq}$) durch eine zweite Transferfunktion ($FH12_q$; $FH12_{Oq}$) und für das Hinzufügen der besagten, vervielfachten ersten Fourier-Transformation ($P1_q$) und der besagten, vervielfachten zweiten Fourier-Transformation ($P2_q$), dadurch eine demultiplexte Fourier-Transformation ($FY_{Hq}$; $FY_{HOq}$) zur Verfügung stellend, und für das Abrufen der besagten ersten Polarisierungskomponente ($Y_{Hk}$, $Y_{HOk}$) durch das Anwenden einer umgekehrten Fourier-Transformations-Operation auf die besagte, demultiplexte Fourier-Transformation ($FY_{Hq}$; $FY_{HOq}$); und
   - einen dritten Schaltkreis (S1, PMf11, PMf12; S2, $PMf11_O$, $PMf11_E$, $PMf12_O$, $PMf12_E$), der konfiguriert ist für das retroaktive Aktualisieren der besagten ersten Transferfunktion ($FH11_q$; $FH11_{Oq}$) und der besagten, zweiten Transferfunktion ($FH12_q$; $FH12_{Oq}$), was gemäß der besagten, abgerufenen ersten Polarisierungskomponente ($Y_{Hk}$, $Y_{HOk}$), der besagten ersten empfangenen Komponente ($X_{Hk}$) und der besagten zweiten empfangenen Komponente ($X_{Vk}$) erfolgt.

2. Der kohärente optische Empfänger (RX) nach Anspruch 1, wobei der besagte erste Schaltkreis ($PMi_H$, $PMi_V$; $PMi_{HE}$, $PMi_{HO}$, $PMi_{VE}$, PMivo) konfiguriert ist für den Empfang N erster Muster von der besagten, ersten empfangenen Komponente ($X_{Hk}$) und N zweiter Muster von der besagten, zweiten empfangenen Komponente ($X_{Vk}$), wobei N eine ganze Zahl gleich oder größer 1 ist.

3. Der kohärente optische Empfänger (RX) nach Anspruch 2, wobei der erste Schaltkreis ($PMi_H$, $PMi_V$) ein erstes Eingangs-Verarbeitungsmodul ($PMi_H$) und ein zweites Eingangs-Verarbeitungsmodul ($PMi_V$) umfasst, wobei:

   - besagtes erstes Eingangs-Verarbeitungsmodul ($PMi_H$) dafür konfiguriert, um N+L-1 weitere erste Muster ($X_{Hk}$) zur Verfügung zu stellen, die gemäß einer Overlap/Add-Technik oder einer Overlap/Save-Technik besagte N erste Muster ($X_{Hk}$) umfassen; und
   - besagtes zweites Eingangs-Verarbeitungsmodul ($PMi_V$) dafür konfiguriert, um N+L-1 weitere zweite Muster ($X_{Vk}$) zur Verfügung zu stellen, die gemäß einer Overlap/Add-Technik oder einer Overlap/Save-Technik besagte N zweite Muster ($X_{Vk}$) umfassen,

   wobei L eine ganze Zahl gleich oder größer 1 ist.

4. Der kohärente optische Empfänger (RX) nach Anspruch 3, wobei:

- besagtes erstes Eingangs-Verarbeitungsmodul ($PMi_H$) konfiguriert ist für das Berechnen der besagten, ersten Fourier-Transformation ($FX_{Hq}$) als N+L-1 erste transformierte Muster ($FX_{Hq}$) durch die Anwendung einer Fourier-Transformationsoperation auf die besagten, N+L-1 weiteren ersten Muster ($X_{Hk}$); und
- besagtes zweites Eingangs-Verarbeitungsmodul ($PMi_V$) konfiguriert ist für das Berechnen der besagten zweiten Fourier-Transformation ($FX_{Vq}$) als N+L-1 zweite transformierte Muster ($FX_{Vq}$) durch die Anwendung einer Fourier-Transformationsoperation auf die besagten, N+L-1 weiteren zweiten Muster ($X_{Vk}$).

5. Der kohärente optische Empfänger (RX) nach Anspruch 4, wobei besagter zweiter Schaltkreis (M1, M2, A1, $PM_{OH}$) in erstes Multiplikationsmodul (M1) und ein zweites Multiplikationsmodul (M2) umfasst, wobei:

- besagtes erstes Multiplikationsmodul (M1) dafür konfiguriert ist, um die besagten, N+L-1 ersten transformierten Muster ($FX_{Hq}$) um besagte erste Transferfunktion ($FH11_q$) zu vervielfachen, wobei besagte erste Transferfunktion ($FH11_q$) N+L-1 erste transformierte Koeffizienten ($FH11_q$) umfasst, dadurch N+L-1 erste vervielfachte Muster der besagten, vervielfachten ersten Fourier-Transformation ($P1_q$) erhaltend; und wobei
- besagtes zweites Multiplikationsmodul (M2) dafür konfiguriert ist, um die besagten, N+L-1 zweiten transformierten Muster ($FX_{Vq}$) um besagte zweite Transferfunktion ($FH12_q$) zu vervielfachen, wobei besagte zweite Transferfunktion ($FH12_q$) N+L-1 zweite transformierte Koeffizienten ($FH12_q$) umfasst, dadurch N+L-1 zweite vervielfachte Muster der besagten, vervielfachten zweiten Fourier-Transformation ($P2_q$) erhaltend.

6. Der kohärente optische Empfänger (RX) nach Anspruch 5, wobei besagter zweiter Schaltkreis (M1, M2, A1, $PM_{OH}$) ein Additionsmodul (A1) umfasst, wobei besagtes Additionsmodul (A1) dafür konfiguriert ist, um die besagten, N+L-1 ersten vervielfachten Muster ($P1_q$) und die besagten, N+L-1 zweiten vervielfachten Muster ($P2_q$) zu addieren, dadurch N+L-1 demultiplexte Muster der besagten, demultiplexten Fourier-Transformation ($FY_{Hq}$) erhaltend.

7. Der kohärente optische Empfänger (RX) nach Anspruch 6, wobei besagter zweiter Schaltkreis (M1, M2, A1, $PM_{OH}$) ein Ausgabeverarbeitungsmodul (Processing Module, $PM_{OH}$) umfasst, das dafür konfiguriert ist, um eine inverse Fourier-Transformations-Operation auf besagte N+L-1 demultiplexten, transformierten Muster ($FY_{Hq}$) anzuwenden und sie gemäß besagter Overlap/Add-Technik oder besagter Overlap/Save-Technik zu verarbeiten, dadurch N demultiplexte Muster ($Y_{Hk}$) von der besagten, abgerufenen ersten Polarisierungskomponente ($Y_{Hk}$) zur Verfügung stellend.

8. Der kohärente optische Empfänger (RX) nach Anspruch 7, wobei besagter dritter Schaltkreis (S1, PMf11, PMf12) einen Supervisor (S1) umfasst, der konfiguriert ist für:

- das Verarbeiten der besagten, N demultiplexten Muster ($Y_{Hk}$), der besagten, N ersten Muster ($X_{Hk}$) und der besagten, N zweiten Muster ($X_{Vk}$) zur Berechnung von N ersten Aktualisierungsfaktoren und N zweiten Aktualisierungsfaktoren;
- das Berechnen eines Durchschnitts der besagten, N ersten Aktualisierungsfaktoren zwecks Erhalts eines ersten durchschnittlichen Aktualisierungsfaktors (AU11) und der besagten, N zweiten Aktualisierungsfaktoren zwecks Erhalts eines zweiten durchschnittlichen Aktualisierungsfaktors (AU 12); und
- das Aktualisieren L erster Koeffizienten ($H11_j$) und L zweiter Koeffizienten ($H12_j$), indem er ihnen jeweils besagten ersten durchschnittlichen Aktualisierungsfaktor (AU11) und besagten zweiten durchschnittlichen Aktualisierungsfaktor (AU12), hinzuaddiert.

9. Der kohärente optische Empfänger (RX) nach Anspruch 8, wobei besagter Supervisor (S1) weiterhin konfiguriert ist für das Verarbeiten der N demultiplexten Muster ($Y_{Hk}$), N ersten Muster ($X_{Hk}$) und N zweiten Muster ($X_{Vk}$) gemäß einem Konstantmodulalgorithmus.

10. Der kohärente optische Empfänger (RX) nach Anspruch 8 oder 9, wobei der besagte dritte Schaltkreis (S1, PMf11, PMf12) weiterhin ein erstes Rückmeldungsverarbeitungsmodul (PMD11) und ein zweites Rückmeldungsverarbeitungsmodul (PMf12) umfasst, wobei:

- besagtes erstes Rückmeldungsverarbeitungsmodul (PMf11) dafür konfiguriert ist, um N+L-1 weitere erste Koeffizienten ($H11_j$) zur Verfügung zu stellen, die gemäß besagter Overlap/Add-Technik oder besagter Overlap/Save-Technik besagte L ersten Koeffizienten ($H11_j$) umfassen; und
- besagtes zweites Rückmeldungsverarbeitungsmodul (PMf12) dafür konfiguriert ist, um N+L-1 weitere zweite

Koeffizienten ($H12_j$) zur Verfügung zu stellen, die gemäß besagter Overlap/Add-Technik oder besagter Overlap/Save-Technik besagte L zweiten Koeffizienten ($H12_j$) umfassen.

**11.** Der kohärente optische Empfänger (RX) nach Anspruch 10, wobei:

- besagtes erstes Rückmeldungsverarbeitungsmodul (PMf11) dafür konfiguriert ist, um eine Fourier-Transformations-Operation auf besagte N+L-1 weitere erste Koeffizienten ($H11_j$) anzuwenden, dabei N+L-1 erste transformierte Koeffizienten ($FH11_q$) generierend; und
- besagtes zweites Rückmeldungsverarbeitungsmodul (PMf12) dafür konfiguriert ist, um eine Fourier-Transformations-Operation auf besagte N+L-1 weiteren zweiten Koeffizienten ($H12_j$) anzuwenden, dabei N+L-1 zweite transformierte Koeffizienten ($FH12_q$) generierend.

**12.** Der kohärente optische Empfänger (RX) nach Anspruch 2, wobei besagter erster Schaltkreis ($PMi_{HE}$, $PMi_{HO}$, $PMi_{VE}$, PMivo) weiterhin dafür konfiguriert ist, um vor dem Berechnen der besagten ersten Fourier-Transformation ($FX_{HEq}$) und der besagten zweiten Fourier-Transformation ($FX_{VEq}$) die besagten, N ersten Muster ($X_{Hk}$) in N/2 gerade erste Muster ($X_{HEk}$) und N/2 ungerade erste Muster ($X_{HOk}$) zu teilen, sowie um besagte N zweiten Muster ($X_{Vk}$) in N/2 gerade zweite Muster ($X_{VEk}$) und N/2 ungerade zweite Muster ($X_{VOk}$) zu teilen.

**13.** Der kohärente optische Empfänger (RX) nach Anspruch 12, wobei besagter erster Schaltkreis ($PMi_{HE}$, $PMi_{HO}$, $PMi_{VE}$, $PMi_{VO}$) konfiguriert ist für:

- das Berechnen besagter erster Fourier-Transformation ($FX_{HEq}$) durch das Anwenden einer Fourier-Transformations-Operation auf die besagten, N/2 geraden ersten Muster ($X_{HEk}$), und für das Berechnen besagter zweiter Fourier-Transformation ($FX_{VEq}$) durch das Anwenden einer Fourier-Transformations-Operation auf die besagten, N/2 geraden zweiten Muster ($X_{VEk}$);
- das Berechnen einer dritten Fourier-Transformation ($FX_{HOq}$) durch das Anwenden einer Fourier-Transformations-Operation auf die besagten, N/2 ungeraden ersten Muster ($X_{HOk}$), und für das Berechnen einer vierten Fourier-Transformation ($FX_{VOq}$) durch das Anwenden einer Fourier-Transformations-Operation auf die besagten, N/2 ungeraden zweiten Muster ($X_{VOk}$);

**14.** Der kohärente optische Empfänger (RX) Nach Anspruch 13, wobei besagter zweiter Schaltkreis ($M1_E$, $M1_O$, $M2_E$, $M2_O$, A1, $PM_{OH}$) weiterhin dafür konfiguriert ist, um besagte dritte Fourier-Transformation ($FX_{HOq}$) um eine dritte Transferfunktion ($FH11_{Eq}$) zu vervielfachen, besagte vierte Fourier-Transformation ($FX_{VOq}$) um eine vierte Transferfunktion ($FFH2_{Eq}$) zu vervielfachen sowie um besagte vervielfachte erste Fourier-Transformation, besagte vervielfachte zweite Fourier-Transformation, besagte vervielfachte dritte Fourier-Transformation und besagte vervielfachte vierte Fourier-Transformation zu addieren, dadurch die besagte, demultiplexte Fourier-Transformation ($FY_{HOq}$) zur Verfügung stellend, und wobei er weiterhin dafür konfiguriert ist, um N/2 Muster besagter abgerufener, erster Polarisierungskomponente ($Y_{HOk}$) als inverse Fourier-Transformation besagter demultiplexter Fourier-Transformation ($FY_{HOq}$) zu berechnen.

**15.** Optisches Kommunikationsnetzwerk, einen kohärenten optischen Empfänger (RX) gemäß einem beliebigen der vorstehenden Ansprüche umfassend.

**16.** Verfahren für das Demultiplexen eines polarisierungs-demultiplexten optischen Signals (s(t)), das an einem kohärente optische Empfänger (RX) eines optischen Kommunikationsnetzwerks empfangen wird, wobei besagtes Verfahren die folgenden Schritte umfasst:

- Das Verarbeiten besagten polarisierungs-demultiplexten optischen Signals (s(t)) zum Generieren einer ersten empfangenen Komponente ($X_{Hk}$) und einer zweiten empfangenen Komponente ($X_{Vk}$), wobei sowohl die erste empfangene Komponente ($X_{Hk}$) als auch die zweite empfangene Komponente ($X_{Vk}$) ein Vermischen einer ersten Polarisierungskomponente ($Y_{Hk}$, $Y_{HOk}$) und einer zweiten Polarisierungskomponente ($Y_{Vk}$; $Y_{VOk}$) besagten polarisierungs-demultiplexten optischen Signals (s(t)) in der Form umfasst, wie es ursprünglich übermittelt wurde;
- das Berechnen einer ersten Fourier-Transformation ($FX_{Hq}$; $FX_{HEq}$) der besagten ersten empfangenen Komponente ($X_{Hk}$) und einer zweiten Fourier-Transformation ($FX_{Vq}$; $FX_{VEq}$) der besagten zweiten empfangenen Komponente ($X_{Vk}$);
- das Vervielfachen der besagten ersten Fourier-Transformation ($FX_{Hq}$; $FX_{HEq}$) durch eine erste Transferfunktion ($FH11_q$; $FH11_{Oq}$); das Vervielfachen der besagten zweiten Fourier-Transformation ($FX_{Vq}$; $FX_{VEq}$) durch eine zweite Transferfunktionn ($FH12_q$; $FH12_{Oq}$), das addieren der besagten, vervielfachten ersten Fourier-Transformation ($P1_q$) und der besagten, vervielfachten zweiten Fourier-Transformation ($P2_q$), dadurch eine demultiplexte Fourier-Transformation ($FY_{Hq}$; $FY_{HOq}$) zur Verfügung stellend, und das Abrufen der besagten, ersten Polarisierungskomponente ($Y_{Hk}$, $Y_{HOk}$) durch das Anwenden einer umgekehrten Fourier-Transformations-Operation auf die besagte, demultiplexte Fourier-Transformation ($FY_{Hq}$; $FY_{HOq}$); und

- das retroaktive Aktualisieren der besagten ersten Transferfunktion ($FH11q$; $FH11_{Oq}$) und der besagten zweiten Transferfunktion ($FH12_q$; $FH12_{Oq}$) gemäß der besagten, abgerufenen ersten Polarisierungskomponente ($Y_{Hk}$, $Y_{HOk}$), der besagten ersten empfangenen Komponente ($X_{Hk}$) und der besagten zweiten empfangenen Komponente ($X_{Vk}$).

## Revendications

1. Récepteur optique cohérent (RX) pour un réseau de communication optique, ledit récepteur optique cohérent (RX) étant configuré pour recevoir un signal optique multiplexé en polarisation (s(t)) et pour le traiter pour générer une première composante reçue ($X_{Hk}$) et une deuxième composante reçue ($X_{Vk}$), chacune de ladite première composante reçue ($X_{Hk}$) et de ladite deuxième composante reçue ($X_{Vk}$) comprenant un mélange d'une première composante de polarisation ($Y_{Hk}$ ; $Y_{HOk}$) et d'une deuxième composante de polarisation ($Y_{Vk}$ ; $Y_{VOk}$) dudit signal optique multiplexé en polarisation (s(t)) tel que transmis à l'origine, ledit récepteur optique cohérent (RX) comprenant en outre un démultiplexeur de polarisation (PD ; PD') comprenant à son tour :

   - un premier circuit ($PMi_H$, $PMi_V$ ; $PMi_{HE}$, $PMi_{HO}$, $PMi_{VE}$, PMivo) configuré pour calculer une première transformée de Fourier ($FX_{Hq}$; $FX_{HEq}$) de ladite première composante reçue ($X_{Hk}$) et une deuxième transformée de Fourier ($FX_{Vq}$ ; $FX_{VEq}$) de ladite deuxième composante reçue ($X_{Vk}$) ;
   - un deuxième circuit (M1, M2, A1 $PMo_H$ ; $M1_E$, $M1_O$, $M2_E$, $M2_O$, A1, $PMo_H$) configuré pour multiplier ladite première transformée de Fourier ($FX_{Hq}$ ; $FX_{HEq}$) par une première fonction de transfert ($FH11_q$ ; $FH11_{Oq}$), multiplier ladite deuxième transformée de Fourier ($FX_{Vq}$ ; $FX_{VEq}$) par une deuxième fonction de transfert ($FH12_q$ ; $FH12_{Oq}$) et additionner ladite première transformée de Fourier multipliée ($P1_q$) et ladite deuxième transformée de Fourier multipliée ($P2_q$), fournissant ainsi une transformée de Fourier démultiplexée ($FY_{Hq}$ ; $FY_{HOq}$), et récupérer ladite première composante de polarisation ($Y_{Hk}$ ; $Y_{HOK}$) en appliquant une opération de transformée de Fourier inverse à ladite transformée de Fourier démultiplexée ($FY_{Hq}$ ; $FY_{HOq}$) ; et
   - un troisième circuit (S1, PMf11, PMf12; S2, $PMf11_O$, $PMf11_E$, $PMf12_O$, $PMf12_E$) configuré pour mettre à jour rétroactivement ladite première fonction de transfert ($FH11_q$ ; $FH11_{Oq}$) et ladite deuxième fonction de transfert ($FH12_q$ ; $FH12_{Oq}$), selon ladite première composante de polarisation récupérée ($Y_{Hk}$ ; $Y_{HOk}$), ladite première composante reçue ($X_{Hk}$) et ladite deuxième composante reçue ($X_{Vk}$).

2. Récepteur optique cohérent (RX) selon la revendication 1, dans lequel ledit premier circuit ($PMi_H$, $PMi_V$ ; $PMi_{HE}$, $PMi_{HO}$, $PMi_{VE}$, $PMi_{VO}$) est configuré pour recevoir N premiers échantillons de ladite première composante reçue ($X_{Hk}$) et N deuxièmes échantillons de ladite deuxième composante reçue ($X_{Vk}$), N étant un entier égal ou supérieur à 1.

3. Récepteur optique cohérent (RX) selon la revendication 2, dans lequel ledit premier circuit ($PMi_H$, PMiv) comprend un premier module de traitement d'entrée ($PMi_H$) et un deuxième module de traitement d'entrée ($PMi_V$), dans lequel :

   - ledit premier module de traitement d'entrée ($PMi_H$) est configuré pour fournir N+L-1 premiers échantillons supplémentaires ($X_{Hk}$) comprenant lesdits N premiers échantillons ($X_{Hk}$) selon une technique de chevauchement et addition ou une technique de chevauchement et sauvegarde ; et
   - ledit deuxième module de traitement d'entrée ($PMi_V$) est configuré pour fournir N+L-1 deuxièmes échantillons supplémentaires ($X_{Vk}$) comprenant lesdits N deuxièmes échantillons ($X_{Vk}$) selon une technique de chevauchement et addition ou une technique de chevauchement et sauvegarde,

   L étant un entier égal ou supérieur à 1.

4. Récepteur optique cohérent (RX) selon la revendication 3, dans lequel :

   - ledit premier module de traitement d'entrée ($PMi_H$) est configuré pour calculer ladite première transformée de Fourier ($FX_{Hq}$) comme N+L-1 premiers échantillons transformés ($FX_{Hq}$) en appliquant une opération de transformée de Fourier auxdits N+L-1 premiers échantillons supplémentaires ($X_{Hk}$) ; et
   - ledit deuxième module de traitement d'entrée (PMiv) est configuré pour calculer ladite deuxième transformée de Fourier (FX$_{Vq}$) comme N+L-1 deuxièmes échantillons transformés (FX$_{Vq}$) en appliquant une opération de transformée de Fourier auxdits N+L-1 deuxièmes échantillons supplémentaires (X$_{Vk}$),

**5.** Récepteur optique cohérent (RX) selon la revendication 4, dans lequel ledit deuxième circuit (M1, M2, A1, PMo$_H$) comprend un premier module de multiplication (M1) et un deuxième module de multiplication (M2), dans lequel :

- ledit premier module de multiplication (M1) est configuré pour multiplier lesdits N+L-1 premiers échantillons transformés (FX$_{Hq}$) par ladite première fonction de transfert (FH11$_q$), ladite première fonction de transfert (FH11$_q$) comprenant N+L-1 premiers coefficients transformés (FH11$_q$), obtenant ainsi N+L-1 premiers échantillons multipliés de ladite première transformée de Fourier multipliée (P1$_q$) ;

et

- ledit deuxième module de multiplication (M2) est configuré pour multiplier lesdits N+L-1 deuxièmes échantillons transformés (FX$_{Vq}$) par ladite deuxième fonction de transfert (FH12$_q$), ladite deuxième fonction de transfert (FH12$_q$) comprenant N+L-1 deuxièmes coefficients transformés (FH12$_q$), obtenant ainsi N+L-1 deuxièmes échantillons multipliés de ladite deuxième transformée de Fourier multipliée (P2$_q$).

**6.** Récepteur optique cohérent (RX) selon la revendication 5, dans lequel ledit deuxième circuit (M1, M2, A1, PMo$_H$) comprend un module d'addition (A1), ledit module d'addition (A1) étant configuré pour additionner lesdits N+L-1 premiers échantillons multipliés (P1$_q$) et lesdits N+L-1 deuxièmes échantillons multipliés (P2q), obtenant ainsi N+L-1 échantillons transformés démultiplexés de ladite transformée de Fourier démultiplexée (FY$_{Hq}$).

**7.** Récepteur optique cohérent (RX) selon la revendication 6, dans lequel ledit deuxième circuit (M1, M2, A1, PMo$_H$) comprend un module de traitement de sortie (PMo$_H$) configuré pour appliquer une opération de transformée de Fourier inverse auxdits N+L-1 échantillons transformés démultiplexés (FY$_{Hq}$) et pour les traiter selon ladite technique de chevauchement et addition ou ladite technique de chevauchement et sauvegarde, fournissant ainsi N échantillons démultiplexés (Y$_{Hk}$) de ladite première composante de polarisation récupérée (Y$_{Hk}$).

**8.** Récepteur optique cohérent (RX) selon la revendication 7, dans lequel ledit troisième circuit (S1, PMf11, PMf12) comprend un superviseur (S1) configuré pour :

- traiter lesdits N échantillons démultiplexés (Y$_{Hk}$), lesdits N premiers échantillons (X$_{Hk}$) et lesdits N deuxièmes échantillons (X$_{Vk}$) pour calculer N premiers facteurs de mise à jour et N deuxièmes facteurs de mise à jour ;
- faire la moyenne desdits N premiers facteurs de mise à jour pour obtenir un premier facteur de mise à jour moyen (AU11) et desdits N deuxièmes facteurs de mise à jour pour obtenir un deuxième facteur de mise à jour moyen (AU12) ; et
- mettre à jour L premiers coefficients (H11$_j$) et L deuxièmes coefficients (H12$_j$) en leur ajoutant ledit premier facteur de mise à jour moyen (AU11) et ledit deuxième facteur de mise à jour moyen (AU12), respectivement.

**9.** Récepteur optique cohérent (RX) selon la revendication 8, dans lequel ledit superviseur (S1) est en outre configuré pour traiter lesdits N échantillons démultiplexés (Y$_{Hk}$), lesdits N premiers échantillons (X$_{Hk}$) et lesdits N deuxièmes échantillons (X$_{Vk}$) selon un algorithme à module constant.

**10.** Récepteur optique cohérent (RX) selon la revendication 8 ou 9, dans lequel ledit troisième circuit (S1, PMf11, PMf12) comprend en outre un premier module de traitement de rétroaction (PMf11) et un deuxième module de traitement de rétroaction (PMf12), dans lequel :

- ledit premier module de traitement de rétroaction (PMf11) est configuré pour fournir N+L-1 premiers coefficients supplémentaires (H11$_j$) comprenant lesdits L premiers coefficients (H11$_j$), selon ladite technique de chevauchement et addition ou ladite technique de chevauchement et sauvegarde ; et
- ledit deuxième module de traitement de rétroaction (PMf12) est configuré pour fournir N+L-1 deuxièmes coefficients supplémentaires (H12$_j$) comprenant lesdits L deuxièmes coefficients (H12$_j$), selon ladite technique de chevauchement et addition ou ladite technique de chevauchement et sauvegarde.

**11.** Récepteur optique cohérent (RX) selon la revendication 10, dans lequel :

- ledit premier module de traitement de rétroaction (PMf11) est configuré pour appliquer une opération de transformée de Fourier auxdits N+L-1 premiers coefficients supplémentaires (H11$_j$), générant ainsi lesdits N+L-1 premiers coefficients transformés (FH11$_q$) ; et

- ledit deuxième module de traitement de rétroaction (PMf12) est configuré pour appliquer une opération de transformée de Fourier auxdits N+L-1 deuxièmes coefficients supplémentaires (H12$_j$), générant ainsi lesdits N+L-1 deuxièmes coefficients transformés (FH12$_q$).

12. Récepteur optique cohérent (RX) selon la revendication 2, dans lequel ledit premier circuit (PMi$_{HE}$, PMi$_{HO}$, PMi$_{VE}$, PMi$_{VO}$) est en outre configuré pour, avant de calculer ladite première transformée de Fourier (FX$_{HEq}$) et ladite deuxième transformée de Fourier (FX$_{VEq}$), diviser lesdits N premiers échantillons (X$_{Hk}$) en N/2 premiers échantillons pairs (X$_{HEk}$) et N/2 premiers échantillons impairs (X$_{HOk}$) et diviser lesdits N deuxièmes échantillons (X$_{Vk}$) en N/2 deuxièmes échantillons pairs (X$_{VEk}$) et N/2 premiers échantillons impairs (X$_{VOk}$).

13. Récepteur optique cohérent (RX) selon la revendication 12, dans lequel ledit premier circuit (PMi$_{HE}$, PMi$_{HO}$, PMi$_{VE}$, PMivo) est configuré pour :

- calculer ladite première transformée de Fourier (FX$_{HEq}$) en appliquant une opération de transformée de Fourier auxdits N/2 premiers échantillons pairs (X$_{HEk}$) et calculer ladite deuxième transformée de Fourier (FX$_{VEq}$) en appliquant une opération de transformée de Fourier auxdits N/2 deuxièmes échantillons pairs (X$_{VEk}$) ;
- calculer une troisième transformée de Fourier (FX$_{HOq}$) en appliquant une opération de transformée de Fourier auxdits N/2 premiers échantillons impairs (X$_{HOk}$) et calculer une quatrième transformée de Fourier (FX$_{VOq}$) en appliquant une opération de transformée de Fourier auxdits N/2 deuxièmes échantillons impairs (X$_{VOk}$).

14. Récepteur optique cohérent (RX) selon la revendication 13, dans lequel ledit deuxième circuit (M1$_E$, M1$_O$, M2$_E$, M2$_O$, A1, PMo$_H$) est en outre configuré pour multiplier ladite troisième transformée de Fourier (FX$_{HOq}$) par une troisième fonction de transfert (FH11$_{Eq}$), multiplier ladite quatrième transformée de Fourier (FX$_{VOq}$) par une quatrième fonction de transfert (FH12$_{Eq}$) et additionner ladite première transformée de Fourier multipliée, ladite deuxième transformée de Fourier multipliée, ladite troisième transformée de Fourier multipliée et ladite quatrième transformée de Fourier multipliée, fournissant ainsi ladite transformée de Fourier démultiplexée (FY$_{HOq}$), et calculer N/2 échantillons de ladite première composante de polarisation récupérée (Y$_{HOk}$) comme une transformée de Fourier inverse de ladite transformée de Fourier démultiplexée (FY$_{HOq}$).

15. Réseau de communication optique comprenant un récepteur optique cohérent (RX) selon l'une quelconque des revendications précédentes.

16. Procédé pour démultiplexer un signal optique multiplexé en polarisation (s(t)) reçu au niveau d'un récepteur optique cohérent (RX) d'un réseau de communication optique, ledit procédé comprenant les étapes suivantes :

- traiter ledit signal optique multiplexé en polarisation reçu (s(t)) pour générer une première composante reçue (X$_{Hk}$) et une deuxième composante reçue (X$_{Vk}$), chacune de ladite première composante reçue (X$_{Hk}$) et de ladite deuxième composante reçue (X$_{Vk}$) comprenant un mélange d'une première composante de polarisation (Y$_{Hk}$ ; Y$_{HOk}$) et d'une deuxième composante de polarisation (Y$_{Vk}$ ; Y$_{VOk}$) dudit signal optique multiplexé en polarisation (s(t)) tel que transmis à l'origine :
- calculer une première transformée de Fourier (FX$_{Hq}$ ; FX$_{HEq}$) de ladite première composante reçue (X$_{Hk}$) et une deuxième transformée de Fourier (FX$_{Vq}$ ; FX$_{VEq}$) de ladite deuxième composante reçue (X$_{Vk}$) ;
- multiplier ladite première transformée de Fourier (FX$_{Hq}$; FX$_{HEq}$) par une première fonction de transfert (FH11$_q$ ; FH11$_{Oq}$), multiplier ladite deuxième transformée de Fourier (FX$_{Vq}$ ; FX$_{VEq}$) par une deuxième fonction de transfert (FH12$_q$ ; FH12$_{Oq}$), additionner ladite première transformée de Fourier multipliée (P1$_q$) et ladite deuxième transformée de Fourier multipliée (P2$_q$), fournissant ainsi une transformée de Fourier démultiplexée (FY$_{Hq}$ ; FY$_{HOq}$), et récupérer ladite première composante de polarisation (Y$_{Hk}$ ; Y$_{HOk}$) en appliquant une opération de transformée de Fourier inverse à ladite transformée de Fourier démultiplexée (FY$_{Hq}$ ; FY$_{HOq}$). et
- mettre à jour rétroactivement ladite première fonction de transfert (FH11$_q$ ; FH11$_{Oq}$) et ladite deuxième fonction de transfert (FH12$_q$ ; FH12$_{Oq}$), selon ladite première composante de polarisation récupérée (Y$_{Hk}$ ; Y$_{HOk}$), ladite première composante reçue (X$_{Hk}$) et ladite deuxième composante reçue (X$_{Vk}$).

Figure 1

Figure 2

Figure 3

EP 2 381 594 B1

EP 2 381 594 B1

**EP 2 381 594 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2010003028 A